(19) Europäisches Patentamt
European Patent Office
Office européen des brevets

(11) **EP 3 925 025 B1**

(12) **EUROPÄISCHE PATENTSCHRIFT**

(45) Veröffentlichungstag und Bekanntmachung des Hinweises auf die Patenterteilung:
**26.10.2022 Patentblatt 2022/43**

(21) Anmeldenummer: **21722191.0**

(22) Anmeldetag: **27.04.2021**

(51) Internationale Patentklassifikation (IPC):
**H01M 4/90** (2006.01)      **H01M 4/88** (2006.01)
**H01M 4/86** (2006.01)      **H01M 8/1018** (2016.01)
**H01M 8/10** (2016.01)

(52) Gemeinsame Patentklassifikation (CPC):
**H01M 4/9091; H01M 4/88; H01M 4/9008;**
H01M 2004/8689; H01M 2008/1095; Y02E 60/50

(86) Internationale Anmeldenummer:
**PCT/EP2021/060952**

(87) Internationale Veröffentlichungsnummer:
**WO 2021/219617 (04.11.2021 Gazette 2021/44)**

(54) **TRÄGERFREIER SAUERSTOFF-REDUKTIONS-KATALYSATOR FÜR DIE ANWENDUNG IN NIEDERTEMPERATURBRENNSTOFFZELLEN UND VERFAHREN ZU DESSEN HERSTELLUNG**

CARRIER-FREE OXYGEN REDUCTION CATALYST FOR USE IN LOW-TEMPERATURE FUEL CELLS AND METHOD FOR PRODUCING SAME

CATALYSEUR DE RÉDUCTION D'OXYGÈNE SANS SUPPORT DESTINÉ À ÊTRE UTILISÉ DANS DES PILES À COMBUSTIBLE BASSE TEMPÉRATURE ET PROCÉDÉ DE FABRICATION DUDIT CATALYSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2020 DE 102020111647**

(43) Veröffentlichungstag der Anmeldung:
**22.12.2021 Patentblatt 2021/51**

(73) Patentinhaber: **Technische Universität Darmstadt 64289 Darmstadt (DE)**

(72) Erfinder:
- **KRAMM, Ulrike**
  **64285 Darmstadt (DE)**
- **KÜBLER, Markus**
  **70569 Stuttgart (DE)**
- **GRIDIN, Vladislav**
  **63225 Langen (DE)**

(74) Vertreter: **Fuchs Patentanwälte Partnerschaft mbB**
**Westhafenplatz 1**
**60327 Frankfurt am Main (DE)**

(56) Entgegenhaltungen:
**US-A1- 2014 024 521      US-A1- 2015 263 353**

- **LIU DONG ET AL: "Atomically Isolated Iron Atom Anchored on Carbon Nanotubes for Oxygen Reduction Reaction", APPLIED MATERIALS & INTERFACES, Bd. 11, Nr. 43, 30. Oktober 2019 (2019-10-30), Seiten 39820-39826, XP055826406, US ISSN: 1944-8244, DOI: 10.1021/acsami.9b12054**
- **WANG LINA ET AL: "Fe-N-C catalysts for PEMFC: Progress towards the commercial application under DOE reference", JOURNAL OF ENERGY CHEMISTRY, ELSEVIER, AMSTERDAM, NL, Bd. 39, 29. Januar 2019 (2019-01-29), Seiten 77-87, XP085788736, ISSN: 2095-4956, DOI: 10.1016/J.JECHEM.2018.12.019 [gefunden am 2019-01-29]**

- **SUN TAO ET AL: "Recent advances in Fe (or Co)/N/C electrocatalysts for the oxygen reduction reaction in polymer electrolyte membrane fuel cells", JOURNAL OF MATERIALS CHEMISTRY A, Bd. 5, Nr. 36, 1. Januar 2017 (2017-01-01) , Seiten 18933-18950, XP055826344, GB ISSN: 2050-7488, DOI: 10.1039/C7TA04915C Gefunden im Internet: URL:https://pubs.rsc.org/en/content/articl epdf/2017/ta/c7ta04915c>**

**Beschreibung**

Die vorliegende Erfindung betrifft einen Sauerstoff-Reduktions-Katalysator für die Anwendung in Niedertemperaturbrennstoffzellen und ein Verfahren zu dessen Herstellung. Dieser bedarf insbesondere keines Trägers und ist frei von Edelmetallen.

Stand der Technik

Im Hinblick auf die Nutzung von erneuerbaren Energien und alternativen Antrieben bieten elektrochemische Reaktionen die Möglichkeit einer schnellen und umweltfreundlichen Umwandlung von chemischer Energie in elektrische Energie. Hierzu werden beispielsweise Brennstoffzellen eingesetzt. Die Kathode in Polymer-Elektrolyt-Membran-Brennstoffzellen enthält derzeit als den für den Prozess notwendigen Katalysator Pt/C-Katalysatoren. Diese haben zwar den Vorteil einer sehr hohen katalytischen Aktivität, sind jedoch extrem teuer wegen des Platins und zeigen eine schlechte Stabilität und eine Anfälligkeit für Katalysatorvergiftung, sodass die Haltbarkeit und der Preis dieser Katalysatoren einer umfangreicheren Nutzung dieser Technologie bislang noch im Wege stehen.

Metall-Stickstoff-Kohlenstoff (M-N-C)-Materialien werden als vielversprechende kostengünstige Alternative für Pt/C-Katalysatoren intensiv untersucht. Hierbei bestehen noch diverse Schwierigkeiten bei der Gestaltung der Kohlenstoffstruktur und -morphologie, insbesondere im Hinblick auf die Porosität. Ein typisches Problem ist ferner die Dichte an aktiven Zentren. Da die aktiven Zentren während einer Hochtemperaturpyrolyse gebildet werden, enthalten die Katalysatoren typischerweise neben den Aktivzentren auch unerwünschte, anorganische Metallspezies als Verunreinigungen. Dies ist insbesondere für Synthesen mit hohem Metallanteil sowie bei hohen Pyrolysetemperaturen der Fall. Hohe Metallanteile wären jedoch vorteilhaft, um insgesamt mehr aktive Zentren auszubilden.

Ein weiteres Problem betrifft den Kohlenstoff, der für den Elektronentransport und Gastransport benötigt wird. Bei der Synthese der M-N-C-Katalysatoren ist die Karbonisierungsreaktion gebunden an die Formierung der aktiven Zentren. So bleiben bei niedriger Pyrolysetemperatur typischerweise mehr aktive Zentren erhalten (und damit weniger Verunreinigungen), gleichzeitig ist der Kohlenstoff aber eher amorph und damit weniger stabil in der eigentlichen Brennstoffzellenanwendung. Bei einer höheren Pyrolysetemperatur wird eine stärkere Graphitisierung des Kohlenstoffs erreicht (d. h. eine bessere Stabilität in der Brennstoffzelle), gleichzeitig geht damit allerdings die Dichte der Aktivzentren zurück und es werden mehr Nebenprodukte gebildet.

Um die Anteile anorganischer Metallspezies so gering wie möglich zu halten, müssen demnach der Metallanteil sowie die Pyrolysetemperatur niedrig gehalten werden. Zur Verbesserung dieses Mankos mit dem Ziel, möglichst reine Katalysatoren mit möglichst hoher Zentrendichte bei gleichzeitig guter Graphitisierung zu erhalten, wurde von Dong Liu, Jin-Cheng Li, Qiurong Shi, Shuo Feng, Zhaoyuan Lyu, Shichao Ding, Leiduan Hao, Qiang Zhang, Chenhui Wang, Mingjie Xu, Tao Li, Erik Sarnello, Dan Du und Yuehe Lin in dem Artikel "Atomically Isolated Iron Atom Anchored on Carbon Nanotubes for Oxygen Reduction Reaction" in ACS Applied Materials & Interfaces, 2019, 11 (43), Seite 39820-39826, DOI: 10.1021/acsami.9b12054 eine Synthese vorgeschlagen, die einen eisenbasierten Fe-N-C-Katalysator mit einer Kohlenstoff-Nanoröhrchen-Struktur liefert.

Dabei werden einzelne Eisenatome auf der Wand von Kohlenstoff-Nanoröhrchen fixiert. Die Synthese bedient sich hierzu eines Zwischenproduktes aus Methylorange und $FeCl_3$. In diese Lösung wird dann Pyrrol eingetropft und unter Rühren eine Polypyrrol-Nanoröhrchen-Struktur erzeugt. Dieses Polypyrrol wurde danach einer Pyrolyse in einer anfänglichen Stickstoffatmosphäre, die nach 30 Minuten in eine $NH_3$-Atmosphäre gewechselt wurde, unterzogen und dann durch eine Säureätzung mit Schwefelsäure gereinigt. Ein Vergleichsversuch bestand in der identischen Herstellung eines Katalysators, jedoch ohne die Zugabe von Methylorange. Hierbei zeigt sich, dass das Methylorange ursächlich für die Ausbildung der hohlen Nanoröhrchen im Polypyrrol ist.

In dem Artikel wird insbesondere unterstrichen und mit dem Vergleichsversuch mit unregelmäßig agglomeriertem Kohlenstoff belegt, dass die Nanoröhrchen-Struktur ausschlaggebend für eine verbesserte Sauerstoff-Reduktions-Performanz ist. Die drei wesentlichen Aspekte für die verbesserte Leistung seien die hohe Kristallinität des Kohlenstoff-Nanoröhrchen-Netzwerks, die Konfiguration mit vielen Stickstoffdefekten, die mit einzelnen Eisenatomen und mit weiteren Stickstoffatomen koordiniert sind, und eine hohe spezifische Oberfläche mit reichlichen Mikroporen in der Wand. Allerdings wird auch eingestanden, dass die Leistung in saurem Milieu noch verbesserungswürdig ist.

Nachteilig an diesem Katalysator und dessen Synthese sind insbesondere die Toxizität des Methylorange sowie die schlechte Verarbeitbarkeit des Katalysatormaterials zu einer funktionsfähigen Elektrode. Letzteres wird durch die Nanoröhrchen-Struktur des Katalysatormaterials und damit verbundene hohe Kristallinität verursacht. Nicht zuletzt ist auch die noch verbesserungswürdige Aktivität des Katalysators für die Sauerstoff-Reduktions-Reaktion zu nennen.

Aufgabe

Ausgehend von diesen Problemen war es eine Aufgabe der vorliegenden Erfindung einen trägerfreien Sauerstoff-Reduktions-Katalysator und ein Herstellungsverfahren dafür bereitzustellen, mit dem die Nachteile der Katalysatoren und Verfahren aus dem Stand der Technik überwunden werden. Insbesondere war es die Aufgabe dieser Erfindung, ein Verfahren bereitzustellen, das auf einfache Weise zu einem langzeitstabilen, hochaktiven Katalysator führt, der sich insbesondere leicht weiterverarbeiten lässt.

<u>Beschreibung der Erfindung</u>

Gelöst wird diese Aufgabe durch ein Verfahren und einen Sauerstoff-Reduktions-Katalysator gemäß den unabhängigen Ansprüchen. Bevorzugte Ausgestaltungsvarianten sind Gegenstand der abhängigen Ansprüche.

Das erfindungsgemäße Verfahren zur Herstellung eines trägerfreien Sauerstoff-Reduktions-Katalysators für die Anwendung in Niedertemperaturbrennstoffzellen beinhaltet in der angegebenen Reihenfolge die Schritte

a) Herstellen einer Lösung eines stickstoffhaltigen aromatischen Monomers, das zu leitfähigen Polymeren führt, und einer aromatischen Sulfonsäure,

b) Herstellen einer Lösung eines Oxidationsmittels,

c) Mischen der Lösungen aus Schritt a) und b) und Stehenlassen der Mischung zur Herstellung eines dotierten leitfähigen Polymeren, das beispielsweise durch Filtration oder Abdampfen des Wassers isoliert wird, wobei die Lösungen aus Schritt a) und b) optional mit einem oder mehreren Übergangsmetallsalzen gemischt werden können, um direkt eine Präkursor-Mischung zu erhalten,

d) sofern nicht bereits in Schritt c) die Präkursor-Mischung hergestellt wurde, Herstellen der Präkursor-Mischung durch 1.) Mischen des dotierten leitfähigen Polymeren mit einem oder mehreren Übergangsmetallsalzen oder 2.) Imprägnieren des dotierten leitfähigen Polymeren mit einer Dispersion eines oder mehrerer Übergangsmetallsalze,

e) Pyrolyse der Präkursor-Mischung in einer Inertgasatmosphäre zur Herstellung des Katalysators,

f) Durchführen eines Säureätzschritts mit einer Mischung aus einer Mineralsäure und einem Lösungsmittel zur Herstellung eines geätzten Katalysators,

g) Pyrolyse des geätzten Katalysators in einer Inertgasatmosphäre oder einer Reaktivgasatmosphäre,

h) optional Wiederholen der Schritte f) und g).

Die Lösungen in Schritt a) und b) werden vorzugsweise mit Wasser hergestellt. Sofern die Wasserlöslichkeit nicht ausreichend ist, können auch Mischungen aus Wasser und organischen Lösungsmitteln oder organische Lösungsmittel verwendet werden.

Die dotierten leitfähigen Polymere können in Schritt c) beispielsweise durch Filtration oder Eindampfen des Lösungsmittels erhalten werden.

Das Imprägnieren in Schritt d) 2.) erfolgt beispielsweise mit einer Dispersion in einer Mischung aus Wasser und einem Alkohol und anschließendes Trocknen.

Unter "trägerfrei" ist im Rahmen der Anmeldung insbesondere zu verstehen, dass der Katalysator weder bei der Herstellung noch beim Einsatz auf einem Trägermaterial aufgebracht ist. Insbesondere werden keine kohlenstoffbasierten Trägermaterialien, wie zum Beispiel Kohlenstoff-Nanoröhrchen, Graphen, Grafit, Kohlenstofffasern, Kohlenstoff-Aerogel oder Ruß (carbon black), eingesetzt. Für den erfindungsgemäßen Katalysator mit M-N-C-Struktur wird als Kohlenstoffquelle lediglich das leitfähige Polymer benötigt. Hierdurch ist es möglich im Vergleich zu Kohlenstoff-geträgerten M-N-C-Katalysatoren eine höhere Dichte an Aktivzentren zu erreichen.

Unter einer Mineralsäure wird im Rahmen der Anmeldung die enge Definition als Sammelbegriff für HCl, $H_2SO_4$ und $HNO_3$ verstanden.

Vorzugsweise ist das stickstoffhaltige aromatische Monomer, das zu leitfähigen Polymeren führt ausgewählt aus Pyrrol, Anilin, Carbazol und Indol, höchst bevorzugt ist es Pyrrol.

Vorzugsweise ist die aromatische Sulfonsäure ausgewählt aus Sulfanilsäure, Benzolsulfonsäure, Toluolsulfonsäure, Dodecylbenzolsulfonsäure und Naphthalinsulfonsäure, höchst bevorzugt ist es Sulfanilsäure.

Kernelement der Erfindung ist, dass das leitfähige Polymer in Gegenwart eines Dotiermittels, nämlich einer aromatischen Sulfonsäure, polymerisiert wurde. Besonders bevorzugt ist die Kombination aus Pyrrolpolymer der Sulfanilsäure. Die Reaktionsmischung zur Pyrolyse besteht demnach aus einem dotierten leitfähigen Polymer und einem oder mehreren Übergangsmetallsalzen. Dadurch, dass der erfindungsgemäße Katalysator nicht auf einem Träger aufgezogen ist oder eine hochkristalline Nanoröhrchen-Struktur hat, lässt er sich erheblich einfacher zu einer funktionsfähigen Elektrode verarbeiten. Außerdem ist er einfacher herzustellen, da man kein Trägermaterial benötigt, das gesondert hergestellt werden muss. Die als Dotierungsmittel eingesetzten aromatischen Sulfonsäuren, insbesondere die Sulfanilsäure, sind im Gegensatz zu Azofarbstoffen wie dem Methylorange nicht toxisch.

Es hat sich überraschend gezeigt, dass eine verbesserte Aktivität sowie Struktur der Katalysatoren nicht von einer Nanoröhrchen-Struktur abhängt. Es wird im Gegenteil sogar eine noch verbesserte Aktivität erreicht, wenn das leitfähige Polymer nicht in Gegenwart von Methylorange, sondern in Gegenwart von aromatischen Sulfonsäuren polymerisiert wird. Besonders ausgeprägt ist dieser Effekt bei der Kombination Polypyrrol/Sulfanilsäure. Dabei werden im Gegensatz zu Methylorange keine Nanoröhrchen gebildet, sondern eine amorphe Struktur. Wird das Polymer in Gegenwart eines Dotiermittels mit einer Sulfonsäuregruppe und einem Phenylrest synthetisiert, sind Aktivität und Struktur des Katalysators erheblich verbessert. Trotz einer geringeren Beladung erreicht zum Beispiel ein Katalysator ausgehend von mit Sulfanilsäure hergestelltem Polypyrrol eine höhere Stromdichte als ein Katalysator, der ausgehend von mit Methylorange hergestelltem Polypyrrol synthetisiert wurde. Dies war so nicht zu erwarten, da Liu et al., wie oben beschrieben, es als wesentliche Vorrausetzung für eine verbesserte Katalysatorleistung angesehen hatten, dass dieser über eine Nanoröhrchen-Struktur verfügt, auf die die einzelnen Eisenatome aufgebracht werden.

Das erfindungsgemäße Verfahren verringert zudem die Ausbildung anorganischer Metallspezies und lässt somit höhere Metallanteile hinsichtlich der Aktivspezies sowie höhere Pyrolysetemperaturen zu. Ferner wurde ein deutlicher Aktivitäts- als auch ein Stabilitätszuwachs des Katalysators, insbesondere mit Sulfanilsäure, im Vergleich zum Stand der Technik erreicht.

In Schritt a) beträgt das molare Verhältnis von stickstoffhaltigem aromatischem Monomer zu aromatischer Sulfonsäure vorzugsweise von 30 : 1 bis 1 : 1, besonders bevorzugt von 30 : 1 bis 5 : 1, mehr bevorzugt von 25 : 1 bis 10 : 1, höchst bevorzugt von 25 : 1 bis 15 : 1. Extrem hohe Gehalte an aromatischer Sulfonsäure wirken sich nachteilig auf die Polymerisationsreaktion aus. Aus einem extrem niedrigen Gehalt an aromatischer Sulfonsäure resultiert eine unzureichende Dotierung und Strukturbeeinflussung.

Das molare Verhältnis von Oxidationsmittel in Schritt b) zu stickstoffhaltigem aromatischem Monomer in Schritt a) beträgt vorzugsweise von 1 : 5 bis 5 : 1, besonders bevorzugt von 1 : 4 bis 4 : 1, mehr bevorzugt von 1 : 3 bis 3 : 1, höchst bevorzugt von 1 : 1,5 bis 1,5 : 1. Insbesondere mit einem molaren Verhältnis von 1 : 1 können gute Ergebnisse erzielt werden.

Das Oxidationsmittel in Schritt b) ist vorzugsweise ausgewählt aus $H_2O_2$, Ammoniumperoxodisulfat oder einem trivalenten Eisensalz (wie $FeCl_3$). Besonders bevorzugt ist hiervon $FeCl_3$, da es als zusätzliche Metallquelle dienen kann.

Das Stehenlassen in Schritt c) zur Polymerisation erfolgt vorzugsweise für 1 - 60 Stunden, besonders bevorzugt 5 - 48 Stunden, mehr bevorzugt 8 - 24 Stunden, höchst bevorzugt 10 - 15 Stunden. Die Temperatur beträgt dabei vorzugsweise von -25 °C bis 25 °C, besonders bevorzugt -20 °C bis 10 °C, mehr bevorzugt -20°C bis 0 °C, höchst bevorzugt -15 °C bis 0 °C. Insbesondere haben sich Polymerisationen für 8 - 24 Stunden bei einer Temperatur von -20 °C bis 0 °C als vorteilhaft erwiesen.

Das Aufarbeiten der Reaktionsmischung aus Schritt c) erfolgt durch Filtration oder Eindampfen des Wassers. Dabei ist ein Waschen des Polymers zur Reinigung nicht zwangsläufig notwendig. Es kann auch darauf verzichtet werden. Es hat sich gezeigt, dass ein Restgehalt an Dotiermittel, insbesondere an Sulfanilsäure, in der Pyrolysemischung sich positiv auf die Aktivität des Katalysators auswirkt. Dies ist unter anderem auf eine Erhöhung der BET-Oberfläche zurückzuführen.

Die Übergangsmetallsalze in Schritt c) und d) sind vorzugsweise aus Salzen von Fe, Mn, Co, Ni, Cu, Cr, V, W, Mo, Zn und Ru ausgewählt. Besonders bevorzugte Übergangsmetallsalze sind ausgewählt aus $FeCl_3$, $FeCl_2$, $Fe(NO_3)_3$, $KMnO_4$, $CoCl_2$ und $Co(NO_3)_2$. Höchst bevorzugt sind die Kombinationen $CoCl_2$ / $Co(NO_3)_2$, $FeCl_3$ / $KMnO_4$, $FeCl_3$/$Mn(Ac)_2$ und $FeCl_3$ / $Fe(NO_3)_3$. Bei den letztgenannten Kombinationen aus zwei Übergangsmetallsalzen tritt jeweils ein überraschender synergistischer Effekt auf. Die mit diesen Salzkombinationen hergestellten Katalysatoren zeigen eine wesentlich verbesserte Aktivität und Selektivität.

Vorzugsweise beträgt in Schritt c) oder d) das Gewichtsverhältnis von dotiertem leitfähigem Polymer zu Übergangsmetallsalzen von 1 : 0,1 bis 1 : 10, besonders bevorzugt von 1 : 1 bis 1 : 7,5, mehr bevorzugt von 1 : 1,25 bis 1 : 5, höchst bevorzugt von 1 : 1,5 bis 1 : 3.

Die Herstellung der Präkursor-Mischung für die Pyrolyse in Schritt e) kann erfindungsgemäß auf drei unterschiedliche Weisen erfolgen. Die Präkursor-Mischung muss das dotierte leitfähige Polymer und ein oder mehrere Übergangsmetallsalze enthalten. Dazu kann das oder die Übergangsmetallsalz(e) bereits während der Polymerisation des stickstoffhaltigen aromatischen Monomers in Schritt c) hinzugeben werden. Dies ist jedoch nur dann sinnvoll, wenn auf ein Waschen des dotierten leitfähigen Polymers verzichtet wird, da ansonsten unkontrollierbare Mengen an Übergangsmetallsalzen ausgewaschen werden. Die anderen beiden Optionen für die Herstellung der Präkursor-Mischung sehen die Zugabe des/der Übergangsmetallsalze(s) zu dem vorbereiteten dotierten leitfähigen Polymer in einem getrennten Schritt d) vor.

In dem trockenen Verfahren gemäß Schritt d) 1.) erfolgt ein Mischen des dotierten leitfähigen Polymeren mit einem oder mehreren Übergangsmetallsalzen. Hierbei handelt es sich bevorzugt um ein mechanisches Mischen. Hierfür eignen sich insbesondere desagglomerierende Mischer. Vorzugsweise erfolgt das Mischen in Schritt d) 1.) in einer Kugelmühle. Mit einer Kugelmühle wird neben einer guten Durchmischung auch eine Desagglomerierung und Korngrößenangleichung erzielt. Beispielsweise lassen sich mit einer Mühle der Firma Retsch Modell NM400 bei 30 Hz in 15 min gute Ergebnisse erzielen.

In dem nassen Verfahren gemäß Schritt d) 2.) erfolgt ein Imprägnieren des dotierten leitfähigen Polymeren mit einer Dispersion eines oder mehrerer Übergangsmetallsalze. Dies erfolgt beispielsweise in einer Mischung aus Wasser und einem Alkohol und anschließendes Trocknen. Der Alkohol kann ausgewählt werden aus Ethanol, Methanol, Isopropanol und Polyolen wie beispielsweise Ethylenglycol, Diethylenglycol, Triethylenglycol, Glycerol und Propylenglycol. Alternativ zu einem Alkohol eignen sich als Lösungsmittel auch Dimethylformamid und Tetrahydrofuran.

Bei der Pyrolyse in Schritt e) und/oder g) wird vorzugsweise mit einer Aufheizrate von 100 °C/h bis 1.000 °C/h, besonders bevorzugt 150 °C/h bis 750 °C/h, mehr bevorzugt 200 °C/h bis 500 °C/h, höchst bevorzugt 250 °C/h bis 350 °C/h, aufgeheizt. Vorzugsweise wird dabei auf eine Temperatur von 600 °C bis 1.200 °C, besonders bevorzugt 700 °C bis 1.175 °C, mehr bevorzugt 800 °C bis 1.150 °C, höchst bevorzugt 900 °C bis 1.100 °C, aufgeheizt. Diese Temperatur wird dann vorzugsweise für 0,1 h bis 10 h, besonders bevorzugt 0,3 h bis 6 h, mehr bevorzugt 0,4 h bis 4 h, höchst bevorzugt 0,5 h bis 2 h, gehalten. Anschließend wird vorzugsweise auf 10 °C bis 100 °C, besonders bevorzugt 15 °C bis 70 °C, mehr bevorzugt 15 °C bis 50 °C, höchst bevorzugt 20 °C bis 30 °C, abgekühlt. Das Abkühlen erfolgt noch unter Inertgasatmosphäre.

Zu einer höheren Reinheit des Katalysators trägt insbesondere auch der Säureätzschritt bei. Im Gegensatz zum Stand der Technik wird erfindungsgemäß nicht nur eine Säure eingesetzt, sondern eine Mischung aus einer Mineralsäure und einem Lösungsmittel. Das Lösungsmittel kann ein organisches Lösungsmittel sein. Dies ermöglicht es, die Kohlenstoffpartikel des Katalysators feiner zu dispergieren und Agglomerate aufzubrechen. Der Ätzschritt wird somit wesentlich effektiver als im Stand der Technik bekannt ist. Es können deutlich mehr unerwünschte, da nicht katalytisch-aktive, anorganische Eisenphasen entfernt werden. Durch die Zugabe des Lösungsmittels wird die Entfernbarkeit anorganischer Eisennebenphasen deutlich verbessert. Es werden mindestens 50 Gew.-% der nicht katalytisch aktiven anorganischen Eisennebenphasen entfernt. Vorzugsweise werden mindestens 60 Gew.-%, mindestens 65 Gew.-%, mindestens 70 Gew.-%, mindestens 75 Gew.-%, mindestens 80 Gew.-% der nicht katalytisch aktiven anorganischen Eisennebenphasen entfernt.

Der Säureätzschritt in Schritt f) erfolgt vorzugsweise für 1 h bis 10 h, besonders bevorzugt 1,5 h bis 8 h, mehr bevorzugt 2 h bis 5 h, höchst bevorzugt 2,5 h bis 3,5 h, in einem Ultraschallbad in einer Inertgasatmosphäre. Die Temperatur beträgt dabei vorzugsweise 20 °C bis 100 °C, besonders bevorzugt 30 °C bis 90 °C, mehr bevorzugt 40 °C bis 80 °C, höchst bevorzugt 50 °C bis 60 °C. Das eingesetzte Inertgas ist vorzugsweise Stickstoff oder Argon.

Ferner wird der Säureätzschritt in Schritt f) vorzugsweise mit einer 0,1 M bis 10 M, besonders bevorzugt 0,5 M bis 8 M, mehr bevorzugt 1 M bis 6 M, höchst bevorzugt 2 M bis 5 M, Mineralsäure und einem organischen Lösungsmittel ausgewählt aus Isopropanol, Ethanol, Methanol, Polyolen wie beispielsweise Ethylenglycol, Diethylenglycol, Triethylenglycol, Glycerol, Propylenglycol, Dimethylformamid, Tetrahydrofuran und Pyridin durchgeführt. Geeignete Lösungsmittel zeichnen sich insbesondere dadurch aus, dass sie die Oberflächenspannung des Wassers herabsetzen. Das Volumenverhältnis von Mineralsäure zu Lösungsmittel beträgt hierbei vorzugsweise 1 : 10 bis 10 : 1, besonders bevorzugt 1 : 7,5 bis 7,5 : 1, mehr bevorzugt 1 : 5 bis 5 : 1, höchst bevorzugt 1 : 2 bis 2 : 1.

Vorzugsweise wird nach dem Säureätzschritt in Schritt f) die Mischung 10 h bis 24 h, besonders bevorzugt 10 h bis 20 h, mehr bevorzugt 10 h bis 15 h, höchst bevorzugt 11 h bis 13 h, ruhen gelassen, bevor sie filtriert, gewaschen und getrocknet wird.

Bei der Pyrolyse in Schritt g) wird das Reaktivgas vorzugsweise ausgewählt aus $N_2/H_2$, $H_2$, $CO_2$, $NH_3$.

Ein wesentliches Problem der edelmetallfreien Katalysatoren ist die - im Vergleich zu Platin-basierten Materialien - deutlich geringere Stabilität. Die Stabilitätsabnahme kann über mehrere Mechanismen hervorgerufen werden. Es werden eine Demetallierung, Kohlenstoffkorrosion, Porenflutung und Vergiftung der aktiven Zentren als mögliche Ursachen diskutiert. Es wurde überraschend gefunden, dass durch den zusätzlichen Syntheseschritt einer Fluorierung des bereits pyrolysierten Katalysators und anschließenden erneuten Pyrolyse die Deaktivierung weiter verringert und so eine höhere Stabilität erzielt werden kann. Dieses Ergebnis war vollkommen unerwartet, da ausgehend vom Stand der Technik andere Effekte vermutet wurden.

Höchst bevorzugt wird daher der erhaltene Katalysator nach der Pyrolyse in Schritt g) durch Umsetzung mit einem Fluorierungsmittel fluoriert und anschließend erneut pyrolysiert.

Bei der Fluorierung mit einem Fluorierungsmittel hat es sich gezeigt, dass besonders gute Ergebnisse erzielt werden, wenn der bereits pyrolysierte Katalysator nasschemisch mit einem Fluorierungsreagenz über ein Diazoniumsalz modifiziert wird. Dabei wird eine primäre Aminogruppe am Fluorierungsreagenz in Gegenwart von einer Nitritverbindung zum Diazoniumsalz umgesetzt. Dementsprechend ist es besonders bevorzugt, wenn das Fluorierungsmittel eine fluorhaltige Verbindung mit einer primären Aminogruppe und eine Nitritverbindung umfasst.

Vorzugsweise ist die fluorhaltige Verbindung mit einer primären Aminogruppe eine perfluorierte aromatische Verbindung, insbesondere Pentafluoro-Anilin, und/oder die Nitritverbindung ein anorganisches Nitritsalz, insbesondere ein Alkalimetallnitrit. Das Alkalimetallnitrit kann vorzugsweise aus Lithiumnitrit, Natriumnitrit, Kaliumnitrit oder Rubidiumnitrit, insbesondere Natriumnitrit oder Kaliumnitrit, besonders bevorzugt Natriumnitrit, ausgewählt werden.

Die Präkursor-Mischung wird für die Fluorierung mit einem Fluorierungsmittel gemäß Schritt d) 1.) vorzugsweise in einer Kugelmühle hergestellt. Der somit nach Schritt g) erhaltene pyrolysierte Katalysator wird anschließend in einer Mischung aus Wasser und einem Alkohol dispergiert. Der Alkohol wird dabei vorzugsweise aus den kurzkettigen n- oder iso-Alkanolen mit 1-5 Kohlenstoffatomen gewählt, insbesondere handelt es sich um Methanol, Ethanol, Isopropanol oder n-Butanol.

Das Volumenverhältnis von Wasser zu Alkohol kann dabei von 1:1 bis zu 4:1 betragen, vorzugsweise von 1:1 bis 3:1, insbesondere von 1:1 bis 2:1.

In der Mischung aus Wasser und Alkohol werden 1.0 Massen-Äquivalente des pyrolysierten Katalysators dispergiert und auf eine Reaktionstemperatur von 4 °C bis 80 °C gebracht. Die Reaktionstemperatur kann bevorzugt 10 °C bis 70 °C, 20 °C bis 65 °C, 30 °C bis 60 °C, 40 °C bis 60 °C oder 45 °C bis 55 °C betragen.

Zu der Dispersion werden 0,1 bis 4 Massen-Äquivalente $HBF_4$ und 0,02 bis 3 Massen-Äquivalente des Fluorierungsreagenzes hinzugegeben. Die Massen-Äquivalente $HBF_4$ betragen bevorzugt 0,12 bis 3,5 oder 0,14 bis 3 oder 0,16 bis 2,5 oder 0,18 bis 2 oder 0,2 bis 2 oder 0,2 bis 1. Die Massen-Äquivalente des Fluorierungsreagenzes betragen bevorzugt 0,04 bis 2,5 oder 0,06 bis 2 oder 0,08 bis 1,5 oder 0,10 bis 1 oder 0,2 bis 2 oder 0,10 bis 0,75.

Ferner wird eine Lösung von 0,02 bis 1 Massen-Äquivalenten $NaNO_2$ in Wasser bei 25 °C hergestellt und tropfenweise zur Dispersion hinzugegeben. Die Massen-Äquivalente an $NaNO_2$ betragen vorzugsweise 0,03 bis 0,75 oder 0,04 bis 0,5 oder 0,04 bis 0,25.

Die Reaktionsmischung wird anschließend für eine Reaktionszeit von 0,5 h bis 2 h bei der Reaktionstemperatur gehalten und anschließend filtriert, gewaschen und getrocknet. Die Reaktionszeit beträgt bevorzugt 0,6 h bis 1,75 h oder 0,7 h bis 1,5 h oder 0,8 h bis 1,25 h.

Nach Abschluss der Fluorierung erfolgt eine Hitzebehandlung unter Inertgas und/oder Reaktivgas. Bei dem Inertgas kann es sich bevorzugt um Stickstoff oder ein Edelgas, insbesondere Ar, handeln. Bei dem Reaktivgas kann es sich bevorzugt um $N_2/H_2$, $NH_3$ oder $CO_2$ handeln.

Die Aufheizrate beträgt 100 °C/h bis 1000 °C/h, besonders bevorzugt 300 °C/h bis 950 °C/h oder 500 °C/h bis 900 °C/h oder 700 °C/h bis 850 °C/h oder 750 °C/h bis 850 °C/h. Das Aufheizen erfolgt bis zu einer finalen Pyrolysetemperatur von bevorzugt 250 °C bis 1200 °C, weiter bevorzugt 400 °C bis 1100 °C oder 500 °C bis 1000 °C oder 600 °C bis 950 °C oder 700 °C bis 900 °C. Bevorzugt beträgt die finale Pyrolysetemperatur weniger als 1000 °C, weiter bevorzugt weniger als 950 °C, weiter bevorzugt weniger als 900 °C, besonders bevorzugt weniger als 875 °C, höchst bevorzugt weniger als 850 °C.

Die Pyrolyse erfolgt für eine Dauer von 0,1 h bis 10 h, bevorzugt 0,15 h bis 8 h oder 0,2 h bis 6 h oder 0,2 h bis 4 h oder 0,2 h bis 2 h.

Der so erhaltene Katalysator wird abschließend unter Inertgas auf 10 °C bis 100 °C, bevorzugt 15 °C bis 80 °C oder 20 °C bis 60 °C oder 25 °C bis 40 °C abgekühlt.

Die Fluorierung als solche ist in der Literatur sowohl mit elementaren Fluor als auch mit einem Fluorierungsreagenz bereits bekannt. Ausgehend von bisherigen Daten zu edelmetallfreien Katalysatoren führt die Fluorierung zu einer Verringerung der Sauerstoffreduktionsaktivität, die vermutlich auf die elektronenziehende Eigenschaft des Fluors zurückzuführen ist. Obwohl die Fluorierung zu einer relativen Stabilitätserhöhung führt (zum Beispiel 83 % verbleibende Aktivität nach 100 h im Vergleich zu 30 % beim nicht fluorierten Katalysator bei einem Potentialhalten von 0,5 V), waren die Ergebnisse des Stands der Technik bislang jedoch trotzdem anwendungstechnisch uninteressant, da mit dem Fluorierungsschritt immense Aktivitätsverluste einhergehen. Beispielsweise ergibt sich bei einer Anfangsaktivität des unbehandelten Katalysators von 138 mA/cm$^2$ eine Reduktion auf 4,5 mA/cm$^2$ beim fluorierten Katalysator bei einem Zellpotential von 0,8 V.

Mit der bevorzugten Kombination aus Fluorierung und nachgeschalteter Hitzebehandlung, konnte nun überraschend eine Regeneration der Sauerstoffreduktionsaktivität auf das Niveau des Ausgangskatalysators bei einer gleichzeitigen Zunahme der Stabilität bewirkt werden. Während der Effekt einer nachträglichen Hitzebehandlung auf die Aktivität anhand der Literatur zu erwarten war, nimmt typischerweise die Stabilität mit einer solchen Behandlung ab. So wurde im Stand der Technik bei einer Hitzebehandlung eines zuvor fluorierten Katalysators ausschließlich die zu erwartende Verbesserung der Aktivität beobachtet, jedoch nicht auf das vorherige Maß, sondern nur -25 % der Ausgangsaktivität. Gerade die überraschend gefundene Kombination aus einer Fluorierung mit einem Fluorierungsmittel und einer anschließenden relativ niedrigen Pyrolysetemperatur erzielt erst anwendungstechnisch interessante Werte.

Erfindungsgemäß ist ferner ein trägerfreier Sauerstoff-Reduktions-Katalysator hergestellt nach einem der vorstehenden Verfahren.

Höchst bevorzugt weist der Sauerstoff-Reduktions-Katalysator keine Kohlenstoff-Nanoröhrchen-Struktur auf.

Kurzbeschreibung der Figuren

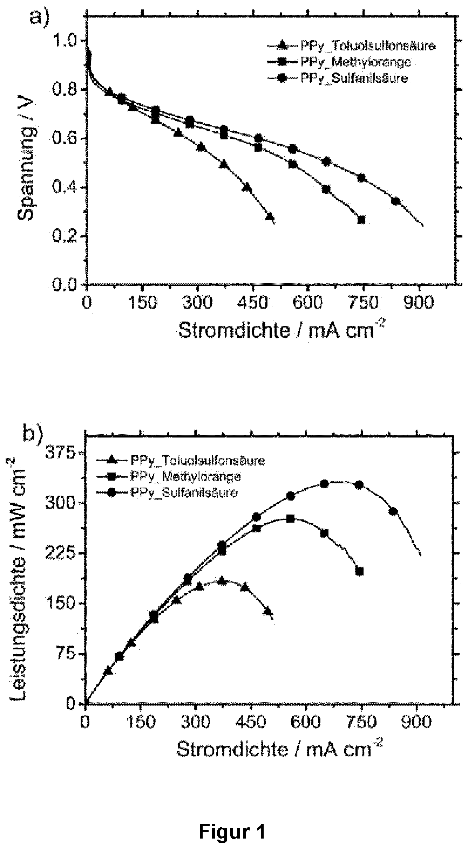

**Figur 1** zeigt Polarisationskurven von Protonentauschmembran-Brennstoffzellen unter Verwendung des erfindungsgemäßen edelmetallfreien Kathodenkatalysators in $H_2$-Luft. In Grafik (a) ist die Zellspannung gegen die Stromdichte aufgetragen, in Grafik (b) die Leistungsdichte gegen die Stromdichte. Verglichen werden Katalysatoren synthetisiert mit verschiedenen Dotiermitteln.

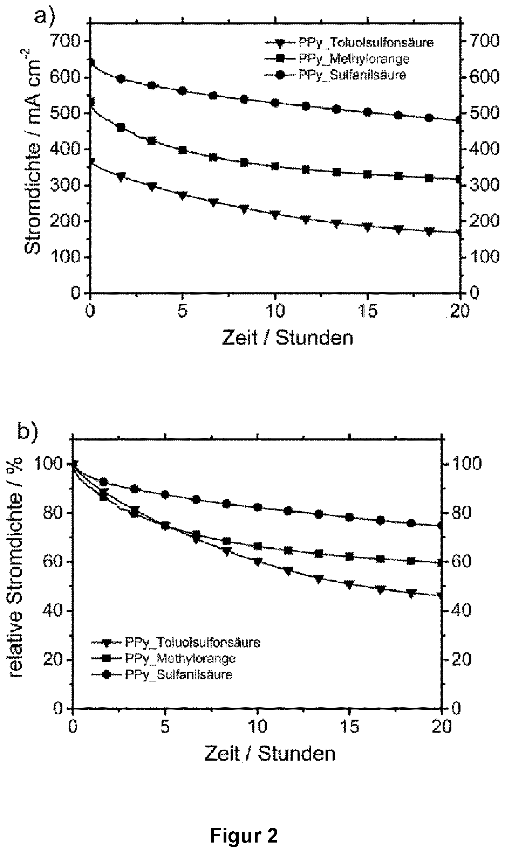

**Figur 2** zeigt Protonentauschmembran-Brennstoffzellen in 20 h-Stabilitätstests unter Verwendung des edelmetallfreien Kathodenkatalysators in $H_2$-Luft. In Grafik (a) ist die Stromdichte gegen die Zeit bei einem Potential von 0,5 V aufgetragen, in Grafik (b) die Stromdichte in % gegen die Zeit. Verglichen werden Katalysatoren synthetisiert mit verschiedenen Dotiermitteln.

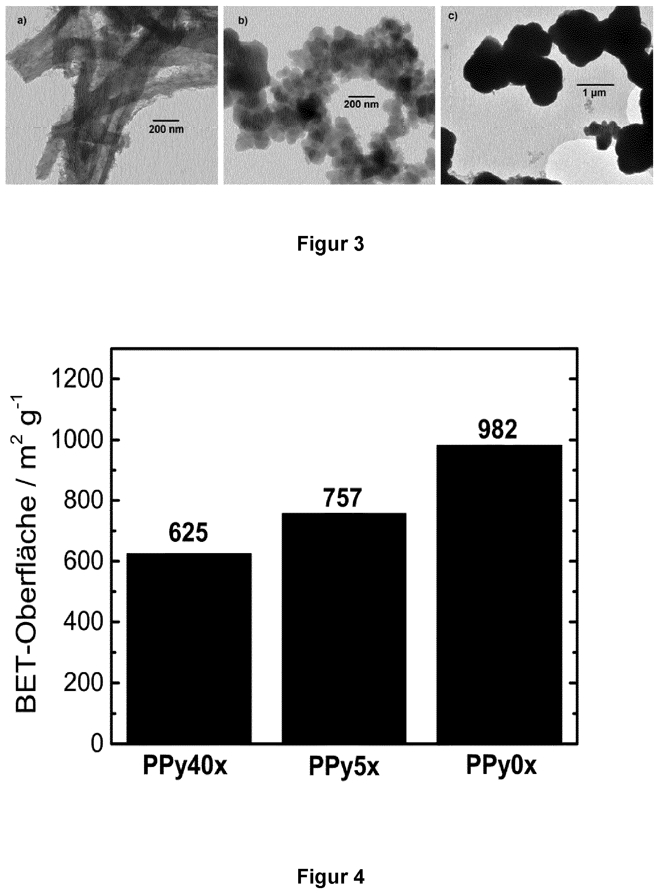

**Figur 3** zeigt Transmissions-Elektronmikroskopie (TEM) Fotografien eines mit (a) Polypyrrol-Methylorange hergestellten Katalysators, eines (b) in identischer Art und Weise jedoch mit Polypyrrol-Sulfanilsäure hergestellten Katalysators und eines (c) in identischer Art und Weise jedoch mit Polypyrrol-Toluolsulfonsäure hergestellten Katalysators. Es wird der Unterschied in der Morphologie des erhaltenen Kohlenstoffs deutlich.

**Figur 4** zeigt die aus $N_2$-Sorptionsmessungen bestimmte BET-Oberfläche von Polypyrrol-Methylorange basierten Katalysatoren, die unter Verwendung verschieden häufig gewaschener Polypyrrol-Präkursoren hergestellt wurden.

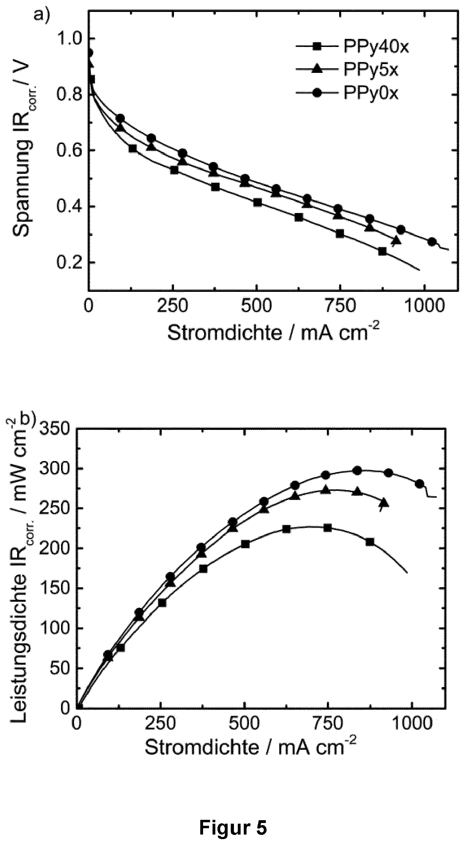

**Figur 5** zeigt Polarisationskurven von Protonentauschmembran-Brennstoffzellen unter Verwendung des erfindungsgemäßen edelmetallfreien Kathodenkatalysators in $H_2$-$O_2$. Verglichen werden Katalysatoren welche unter Verwendung verschieden häufig gewaschener Polypyrrol-Präkursoren hergestellt wurden.

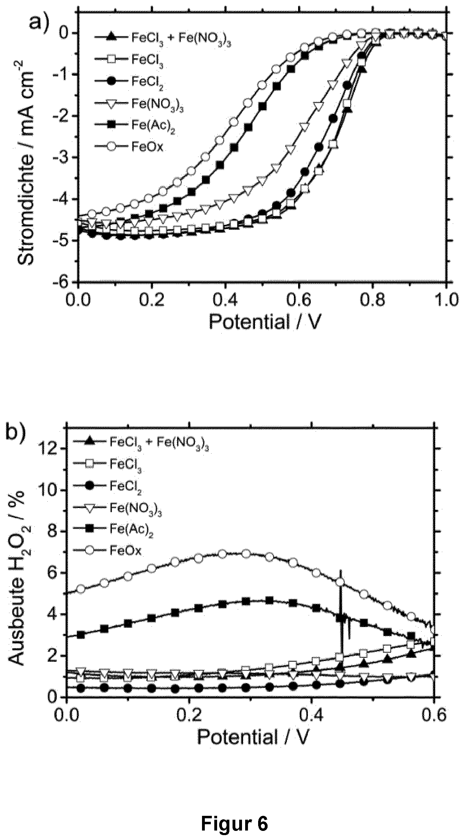

**Figur 6** zeigt Rotierende-Ring-Disk-Elektroden (RRDE) Messungen an Polypyrrol-Methylorange basierten Katalysatoren, die unter Verwendung verschiedener Eisensalz-Präkursoren hergestellt wurden. Grafik (a) zeigt Aktivitätsmessungen und (b) die Wasserstoffperoxidentwicklung.

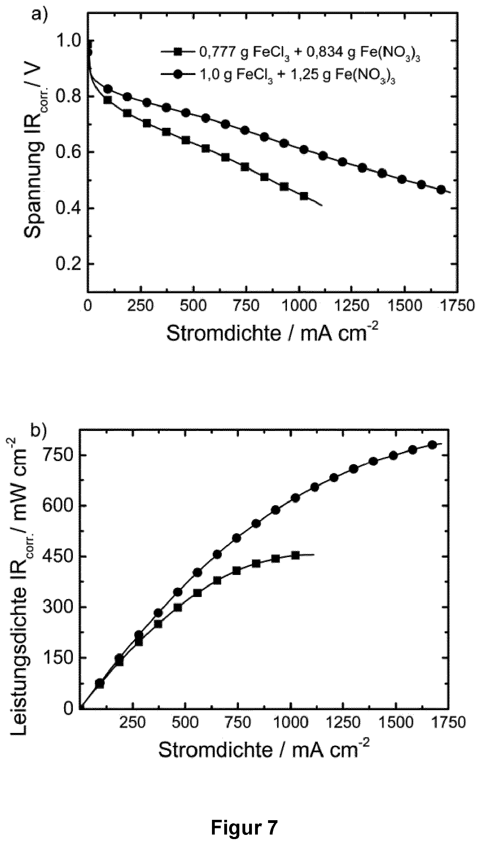

**Figur 7** zeigt Polarisationskurven von Protonentauschmembran-Brennstoffzellen unter Verwendung zweier edelmetallfreier Kathodenkatalysatoren in $H_2$-$O_2$. Verglichen werden Katalysatoren welche mit unterschiedlichen Mengen von $FeCl_3$ und $Fe(NO_3)_3 \times 9\ H_2O$ hergestellt wurden. In Grafik (a) ist das Potential gegen die Stromdichte aufgetragen, in Grafik (b) die Leistungsdichte gegen die Stromdichte.

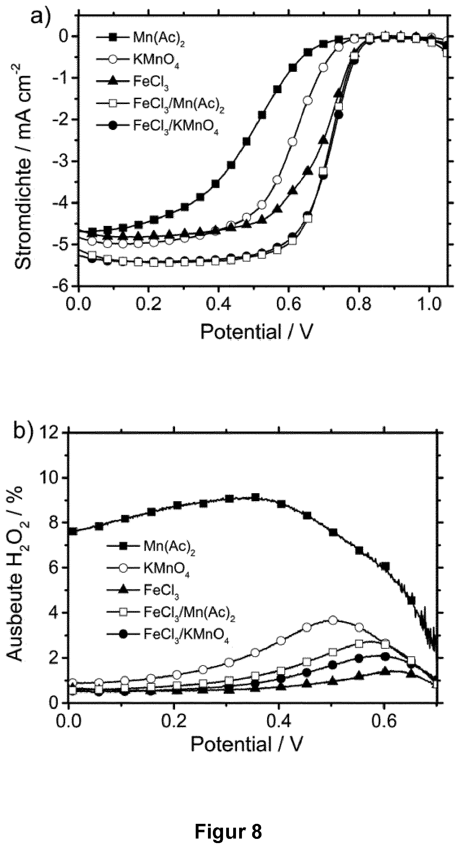

**Figur 8** zeigt Rotierende-Ring-Disk-Elektroden (RRDE) Messungen an Polypyrrol-Methylorange Katalysatoren, Grafik (a) zeigt Aktivitätsmessungen und Grafik (b) die Wasserstoffperoxidentwicklung. Verglichen werden Katalysatoren, die ausgehend von einer Metallquelle bzw. zwei verschiedenen Metallquellen hergestellt wurden.

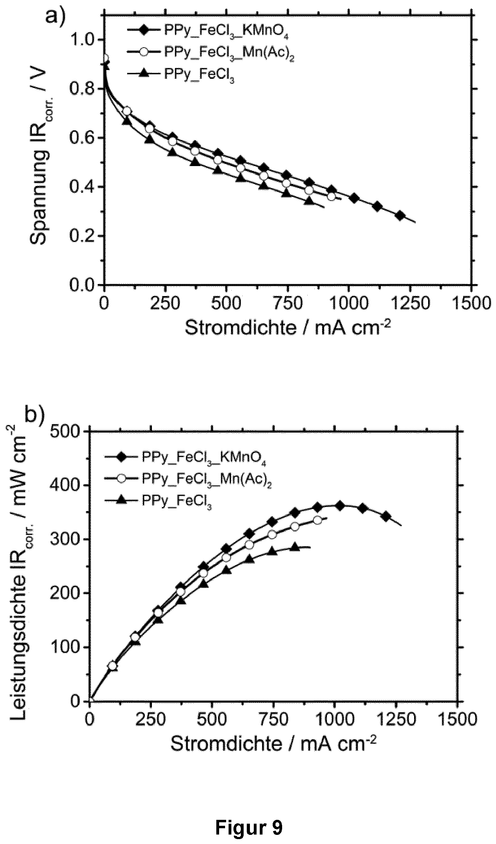

**Figur 9** zeigt Polarisationskurven von Protonentauschmembran-Brennstoffzellen unter Verwendung edelmetallfreier Kathodenkatalysatoren in $H_2$-$O_2$. Verglichen werden Katalysatoren synthetisiert mit $FeCl_3$ und einer Mischung aus $FeCl_3$ und eines Mangansalzes ($KMnO_4$ oder $Mn(Ac)_2$). In Grafik (a) ist das Potential gegen die Stromdichte aufgetragen, in Grafik (b) die Leistungsdichte gegen die Stromdichte.

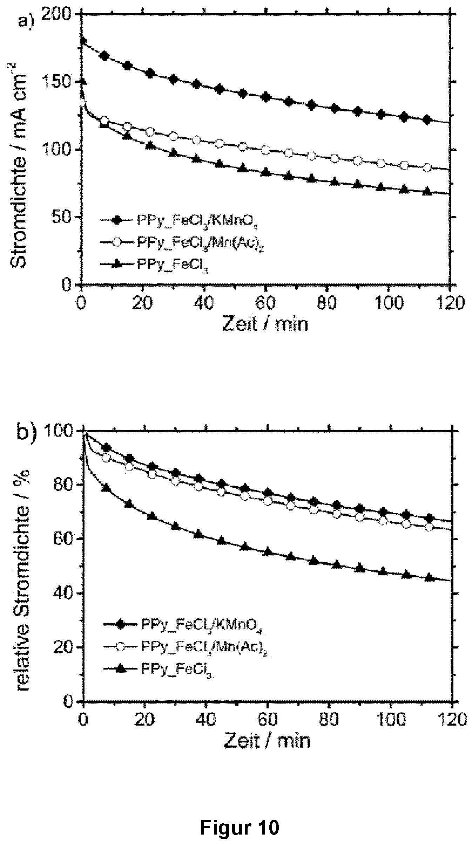

**Figur 10** zeigt Kurzzeitstabilitätstests von Protonentauschmembran-Brennstoffzellen unter Verwendung des edelmetallfreien Kathodenkatalysators in $H_2$-$O_2$. Es ist eine potentiostatische Messung bei 0,6 V. Verglichen werden Katalysatoren synthetisiert mit $FeCl_3$ und unter Zugabe eines Mangansalzes ($KMnO_4$ bzw. $Mn(Ac)_2$). In Grafik (a) ist die Stromdichte gegen die Zeit aufgetragen, in Grafik (b) die Stromdichte in % gegen die Zeit.

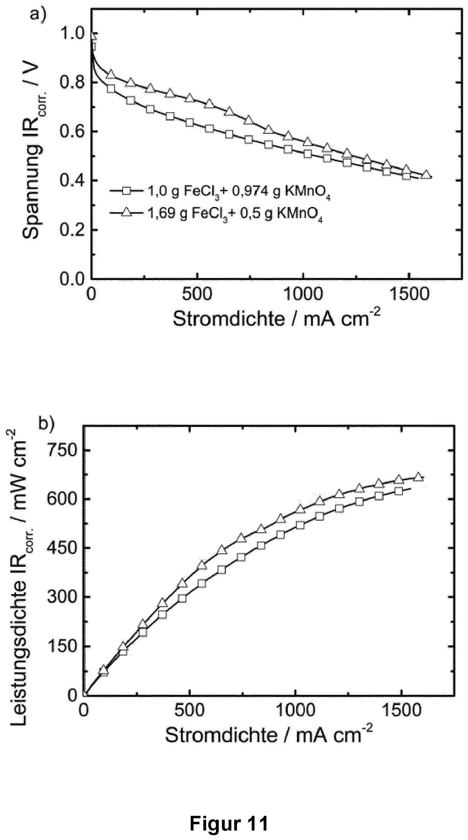

**Figur 11** zeigt Polarisationskurven von Protonentauschmembran-Brennstoffzellen unter Verwendung edelmetallfreier Kathodenkatalysatoren in $H_2$-$O_2$. In Grafik (a) ist die Stromdichte gegen die Zellspannung aufgetragen, in Grafik (b) die Stromdichte gegen die Leistungsdichte. Verglichen werden Katalysatoren synthetisiert mit unterschiedlichen Verhältnissen und Mengen an $FeCl_3$ und $KMnO_4$.

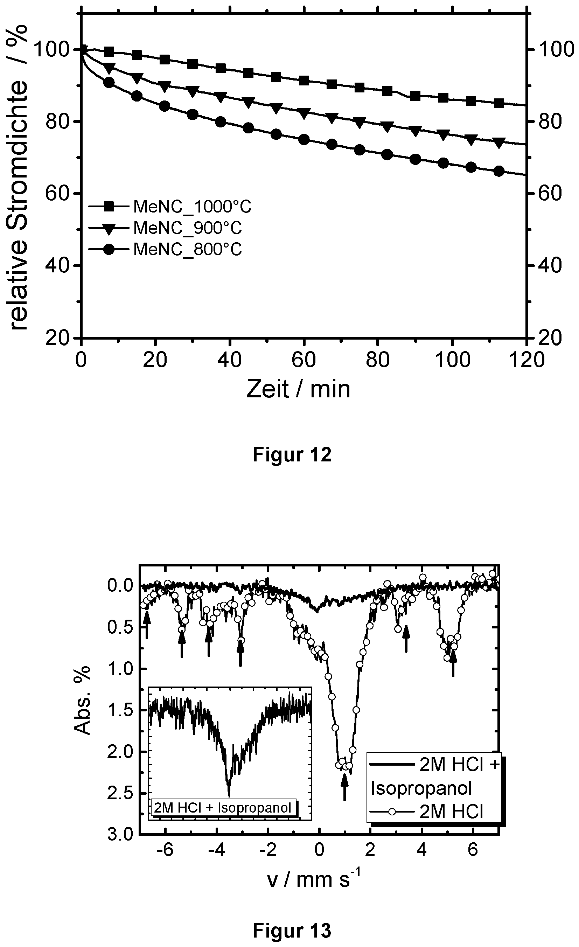

**Figur 12** zeigt Kurzzeitstabilitätstests von Protonentauschmembran-Brennstoffzellen unter Verwendung des edelmetallfreien Kathodenkatalysators in $H_2$-$O_2$. Verglichen werden Katalysatoren synthetisiert bei 800 °C, 900 °C und 1.000 °C. Es ist die Stromdichte in % gegen die Zeit aufgetragen.

**Figur 13** zeigt die $^{57}Fe$-Mössbauer Spektren zweier Katalysatoren, die ausschließlich in Mineralsäure bzw. unter Zugabe von Isopropanol geätzt wurden. Verglichen wird der Einfluss der Isopropanolzugabe auf die strukturelle Zusammensetzung.

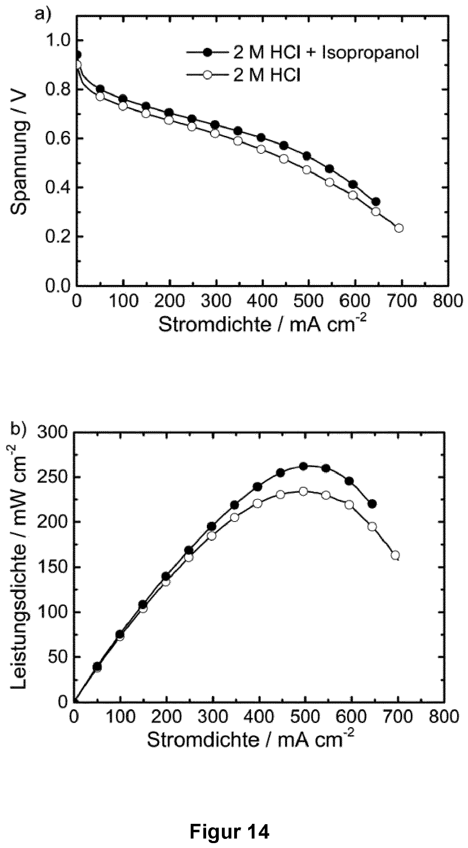

**Figur 14** zeigt Polarisationskurven von Protonentauschmembran-Brennstoffzellen unter Verwendung des edelmetallfreien Kathodenkatalysators in $H_2$-Luft. In Grafik (a) ist die Stromdichte gegen die Zellspannung aufgetragen, in Grafik (b) die Stromdichte gegen die Leistungsdichte. Verglichen werden Katalysatoren die mit oder ohne Anwesenheit von Isopropanol während des Ätzschritts geätzt wurden.

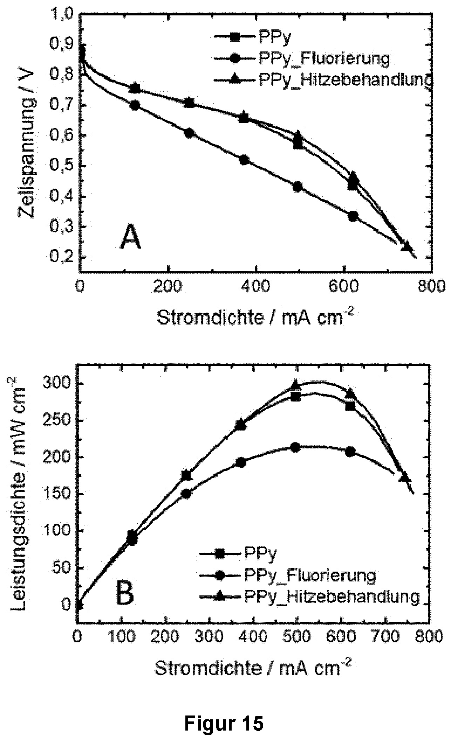

**Figur 15** zeigt Polarisationskurven von Protonentauschmembran-Brennstoffzellen unter Verwendung des pyrolysierten Katalysators (PPy), des fluorierten Katalysators (PPy_Fluorierung) und des im Anschluss hitzebehandelten fluorierten Katalysators (PPy_Hitzebehandlung) von Beispiel 3 in $H_2$-Luft bei 81 °C. In Grafik (A) ist die Zellspannung gegen die Stromdichte aufgetragen und in Grafik (B) die Leistungsdichte gegen die Stromdichte.

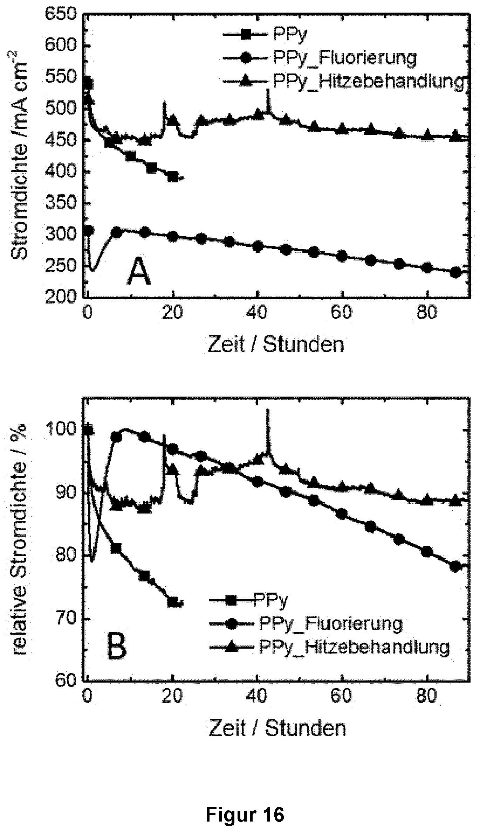

**Figur 16** zeigt die Stabilitätstests der Katalysatoren aus Figur 15, welche in der Protonenaustauschmembran-Brennstoffzelle für 90 h in $H_2$-Luft bei 81 °C und einem Potential von 0,5 V durchgeführt wurden. In Grafik (A) ist die Stromdichte gegen die Zeit aufgetragen und in Grafik (B) ist die relative Stromdichte gegen die Zeit dargestellt. Verglichen wird der Effekt der Fluorierung und anschließender Hitzebehandlung auf die Stabilität.

Beispiele

**Beispiel 1**

Es wurde aus 3,5 g Pyrrol und 0,436 g Sulfanilsäure in 500 ml Wasser eine wässrige Lösung erstellt. Das molare Verhältnis von Pyrrol und Sulfanilsäure betrug dementsprechend 20,7 : 1. Weiterhin wurde eine wässrige Lösung des Oxidationsmittels aus 8,1 g $FeCl_3$ in 500 ml Wasser erstellt. Das molare Verhältnis von Oxidationsmittel zu Pyrrol betrugt dementsprechend 0,96 : 1.

Beide Lösungen wurden vermischt und für eine Reaktionszeit von 600 min bei einer Temperatur von -10 °C stehen gelassen. Als Reaktionsprodukt wurde nach Filtration das dotierte Polypyrrol erhalten.

Für die Herstellung der Präkursor-Mischung für die Pyrolyse wurden 1 g des dotierten Polypyrrols mit 1,69 g $FeCl_3$ und 0,5 g $KMnO_4$ als Übergangsmetallsalze vermischt. Das Gewichtsverhältnis von dotiertem Poly-pyrrol zu Übergangsmetallsalzen betrug dementspre-chend 1 : 2,19. Die Vermischung erfolgte in 20 ml einer Mischung aus Wasser und Ethanol mit dem Volumenverhältnis 1 : 1. Die Dispersion dieser Mischung erfolgte für 20 min mit einem Ultraschallbad. Das Lösungsmittel wurde bei 75 °C unter Luft in einem Trockenschrank verdampft und das erhaltene Präkursor-Pulver von Hand gemörsert.

Die so erhaltene Präkursor-Mischung wurde in einem Hochtemperaturofen unter Stickstoffatmosphäre pyrolysiert. Mit einer Aufheizrate von 300 °C/h wurde auf eine finale Pyrolysetemperatur von 1.000 °C aufgeheizt. Die Haltedauer der finalen Pyrolysetemperatur betrug 1 h. Das erhaltene Pyrolyseprodukt wurde in der Stickstoffatmosphäre auf 25 °C abkühlen gelassen.

Anschließend folgte ein Säureätzschritt mit einer Mischung aus 2 M HCl und Isopropanol. Das Volumenverhältnis von Säure und Lösungsmittel betrug 2 : 1. Der Säureätzschritt wurde bei einer Temperatur von 50 °C für 2,5 h in einem Ultraschallbad unter Stickstoffatmosphäre durchgeführt. Anschließend wurde die Mischung 12 h ruhen gelassen, filtriert, mit 500 ml Wasser gewaschen und getrocknet.

Der geätzte Katalysator wurde danach in einem zweiten Pyrolyseschritt unter Stickstoffatmosphäre erneut behandelt. Die Aufheizrate betrug 800 °C/h. Die finale Pyrolysetemperatur betrug 800 °C und wurde für 15 min gehalten. Es wurde unter Stickstoffatmosphäre auf 25 °C abkühlen gelassen.

**Modellbeispiel 1**

Der Katalysator von Modellbeispiel 1 wurde in identischer Weise hergestellt wie der von Beispiel 1. Bei der Polymerisation des Pyrrols wurde jedoch davon abweichend 0,819 g Methylorange anstatt der 0,436 g Sulfanilsäure verwendet.

**Beispiel 2**

Der Katalysator von Beispiel 2 wurde in identischer Weise hergestellt wie der von Beispiel 1. Bei der Polymerisation des Pyrrols wurde jedoch davon abweichend 0,431 g p-Toluolsulfonsäure anstatt der 0,436 g Sulfanilsäure verwendet.

**Modellbeispiel 2**

Der Katalysator von Modellbeispiel 2 wurde in identischer Weise hergestellt wie der von Modellbeispiel 1. Bei der Herstellung der Präkursor-Mischung für die Pyrolyse wurde jedoch davon abweichend 1,0 g des dotierten Polypyrrols mit 1,0 g $FeCl_3$ und 1,25 g $Fe(NO_3)_3$ $\times$ 9 $H_2O$ vermischt. Außerdem wurde die Pyrolysetemperatur des ersten Pyrolyseschrittes auf 800 °C gesenkt. Der Ätzschritt wurde in 2 M HCl durchgeführt. Es wurde keine zweite Pyrolyse ausgeführt.

**Modellbeispiel 3**

Der Katalysator von Modellbeispiel 3 wurde in identischer Weise hergestellt wie der von Modellbeispiel 2. Nach der Herstellung des Polypyrrols wurde dieses allerdings davon abweichend mit 500 ml einer 1:1 (Volumenverhältnis) Wasser-Aceton-Mischung gewaschen. Dieser Waschschritt wurde 5-mal durchgeführt.

**Modellbeispiel 4**

Der Katalysator von Modellbeispiel 4 wurde in identischer Weise hergestellt wie der von Modellbeispiel 3. Der Waschschritt des Polypyrrols wurde davon abweichend 40-mal durchgeführt.

**Modellbeispiel 5**

Die sechs Katalysatoren von Modellbeispiel 5 wurden in identischer Weise hergestellt wie der von Modellbeispiel 4. Bei der Herstellung der Präkursor-Mischung für die Pyrolyse wurden jedoch davon abweichend 1,0 g des dotierten Polypyrrols mit den entsprechenden Übergangsmetallsalzen vermischt: Dies waren 2,489 g $Fe(NO_3)_3$ $\times$ 9 $H_2O$ oder 1,446 g $FeCl_2$ $\times$ 6 $H_2O$ oder 1,000 g $FeCl_3$ oder 1,060 g $Fe(Acetat)_2$ oder 1,106 g $Fe(Oxalat)$ $\times$ 2 $H_2O$ oder 0,666 g $FeCl_3$ mit 0,834 g $Fe(NO_3)_3$ $\times$ 9 $H_2O$.

**Modellbeispiel 6**

Die zwei Katalysatoren von Modellbeispiel 6 wurden in identischer Weise hergestellt wie der von Modellbeispiel 5. Davon abweichend wurde das Polypyrrol nach der Herstellung nicht gewaschen. Bei der Herstellung der Präkursor-Mischung für die Pyrolyse wurden davon abweichend 1,0 g des dotierten Polypyrrols mit den entsprechenden Übergangsmetallsalzen vermischt: Dies waren 0,666 g $FeCl_3$ mit 0,834 g $Fe(NO_3)_3 \times 9 H_2O$ oder 1,000 g $FeCl_3$ mit 1,250 g $Fe(NO_3)_3 \times 9 H_2O$. Es wurde ein zweiter Pyrolyseschritt durchgeführt. Hierfür betrug die Aufheizrate 450 °C/h. Die finale Pyrolysetemperatur betrug 800 °C und wurde für 45 min gehalten. Es wurde unter Stickstoffatmosphäre auf 25 °C abkühlen gelassen.

## Modellbeispiel 7

Die fünf Katalysatoren von Modellbeispiel 7 wurden in identischer Weise hergestellt wie der von Modellbeispiel 5. Bei der Herstellung der Präkursor-Mischung für die Pyrolyse wurden jedoch davon abweichend 1,0 g des dotierten Polypyrrols mit den entsprechenden Übergangsmetallsalzen vermischt. Dies waren 1,000 g $FeCl_3$ oder 0,974 g $KMnO_4$ oder 1,062 g $Mn(Acetat)_2$ oder 1,000 g $FeCl_3$ und 0,974 g $KMnO_4$ oder 1,000 g $FeCl_3$ und 1,062 g $Mn(Acetat)_2$.

## Modellbeispiel 8

Die drei Katalysatoren von Modellbeispiel 8 wurden in identischer Weise hergestellt wie der von Modellbeispiel 7. Bei der Herstellung der Präkursor-Mischung für die Pyrolyse wurden 1,0 g des dotierten Polypyrrols mit den entsprechenden Übergangsmetallsalzen vermischt. Dies waren 1,000 g $FeCl_3$ oder 1,000 g $FeCl_3$ und 0,974 g $KMnO_4$ oder 1,000 g $FeCl_3$ und 1,062 g $Mn(Acetat)_2$.

## Modellbeispiel 9

Der Katalysator von Modellbeispiel 9 wurde in identischer Weise hergestellt wie der von Modellbeispiel 8. Davon abweichend wurde das Polypyrrol nach der Herstellung nicht gewaschen. Bei der Herstellung der Präkursor-Mischung für die Pyrolyse wurden 1,0 g des dotierten Polypyrrols mit 1,000 g $FeCl_3$ und 0,974 g $KMnO_4$ vermischt. Es wurde ein zweiter Pyrolyseschritt durchgeführt. Die Aufheizrate betrug 800 °C/h. Die finale Pyrolysetemperatur betrug 800 °C und wurde für 15 min gehalten. Es wurde unter Stickstoffatmosphäre auf 25 °C abkühlen gelassen.

## Modellbeispiel 10

Der Katalysator von Modellbeispiel 10 wurde in identischer Weise hergestellt wie der von Modellbeispiel 9. Davon abweichend wurde bei der Herstellung der Präkursor-Mischung für die Pyrolyse 1,0 g des dotierten Polypyrrols mit 1,690 g $FeCl_3$ und 0,500 g $KMnO_4$ vermischt.

## Modellbeispiel 11

Die drei Katalysatoren von Modellbeispiel 11 wurden in identischer Weise hergestellt wie der von Modellbeispiel 10. Davon abweichend betrug die finale Temperatur des ersten Pyrolyseschritts 800 °C oder 900 °C oder 1.000 °C.

## Modellbeispiel 12

Die zwei Katalysatoren von Modellbeispiel 12 wurden in identischer Weise hergestellt wie die von Modellbeispiel 11. Die finale Temperatur des ersten Pyrolyseschritts betrug 1.000 °C. Es wurden zwei Katalysatoren hergestellt, bei denen der Säureätzschritt wie in Beispiel 1 beschrieben durchgeführt wurde oder wie in Beispiel 1 beschrieben, aber davon abweichend nur in 2 M HCl und nicht in 2 M HCl und Isopropanol.

## Beispiel 3

Der Ausgangskatalysator für Beispiel 3 wurde in identischer Weise hergestellt wie der von Beispiel 1. Davon abweichend wurden die Präkursoren in einer Kugelmühle vermischt. Das Vermischen erfolgte bei 30 Hz für 15 min unter Verwendung von vier Kugeln ($ZrO_2$, Durchmesser 10 mm). Der damit hergestellte pyrolysierte Katalysator wird als PPy bezeichnet.

In einer Mischung aus Wasser und Isopropanol mit einem Volumenverhältnis von 2:1 wurden 1.0 Massen-Äquivalente des pyrolysierten Katalysators PPy dispergiert und auf 50 °C erhitzt. Das Mengenverhältnis betrug 15 ml Lösung mit 0,5 g pyrolysiertem Katalysator. Zur Dispersion wurden 0,2 Massen-Äquivalente $HBF_4$ und 0,11 Massen-Äquivalente des Fluorierungsreagenzes Pentafluoro-Anilin hinzugegeben. Ferner wurde eine Lösung von 0,04 Massen-Äquivalenten $NaNO_2$ in Wasser bei 25 °C hergestellt und tropfenweise zur Dispersion hinzugegeben. Das Volumen der Lösung betrug in diesem Beispiel 300 $\mu$l mit 20,7 mg $NaNO_2$. Die Reaktionsmischung wurde für die Dauer einer Reaktionszeit von einer Stunde bei der Reaktionstemperatur von 50 °C gehalten und anschließend filtriert, gewaschen und getrocknet. Der so erhaltene fluorierte pyrolysierte Katalysator wird als PPy_Fluorierung bezeichnet.

Anschließend wurde der fluorierte pyrolysierte Katalysator PPy_Fluorierung einer Hitzebehandlung unter $N_2$ als Inertgas unterzogen. Die Aufheizrate betrug 800 °C/h. Das Aufheizen erfolgte bis zur finalen Pyrolysetemperatur von 800 °C, welche 0,25 h gehalten wurde. Der so erhaltene hitzebehandelte Katalysator wurde auf 25 °C unter Inertgas abgekühlt und als PPy_Hitzebehandlung bezeichnet.

## Einfluss des Dotiermittels

Figur 1 zeigt die Polarisationskurven einer Protonentauschmembran-Brennstoffzelle, präpariert mit Katalysatoren ausgehend von verschieden dotierten Polypyrrol Katalysatoren, die ansonsten identisch hergestellt wurden. Die Herstellung ist jeweils in Beispiel 1, Modellbeispiel 1 und Beispiel 2 beschrieben. Figur 2 zeigt die Kurzzeitstabilitätstests dieser Katalysatoren. Der Unterschied insbesondere des Dotiermittels Sulfanilsäure zum Stand der Technik wird deutlich. Figur 1 zeigt hierbei eine erhebliche Verbesserung der Stofftransporteigenschaften, ersichtlich in der Erhöhung der Stromdichte bei niedrigen Zellspannungen (z. B. < 0,6 V) des mit Sulfanilsäure dotierten Katalysators im Vergleich zu den anderen beiden. Im Stand der Technik (Methylorange) ist der schlechtere Stofftransport vor allem auf die Nanoröhrchen-Struktur ausgehend von den Polypyrrol-Nanotubes zurückzuführen. Diese wird bei der Dotierung mit Sulfanilsäure nicht ausgebildet.

Dies ist in Figur 3 verdeutlicht. In Figur 3 a) ist der Katalysator gezeigt, welcher ausgehend von Polypyrrol-Methylorange hergestellt wurde. Die Nanoröhrchenstruktur ist durch den Pyrolyse-und den Säureätzschritt leicht verändert, das zugrundeliegende Strukturelement der Nanoröhrchenmorphologie ist dennoch auch im fertigen Katalysator erkennbar. Figur 3 b) zeigt den Katalysator, welcher ausgehend von Polypyrrol-Sulfanilsäure hergestellt wurde. Eine deutlich feinere Morphologie der Katalysatorpartikel im Vergleich zu Figur 3 a) wird deutlich, es liegt keine Nanoröhrchenstruktur zugrunde. Weiter zeigt Figur 3 c) die Morphologie des ausgehend von Polypyrrol-Toluolsulfonsäure hergestellten Katalysators. Auch hier liegt keine Nanoröhrchenstruktur vor, allerdings zeigen die Katalysatorpartikel eine gröbere Struktur als in Figur 3 b). Die Aktivität in der Brennstoffzelle, wie in Figur 1 gezeigt, ist deshalb für Polypyrrol-Toluolsulfonsäure-basierte Katalysatoren geringer als für solche basierend auf Polypyrrol-Methylorange und deutlich geringer als für solche ausgehend von Polypyrrol-Sulfanilsäure. Neben der Verbesserung der Aktivität im stofftransport-limitierten Bereich der Polarisationskurve zeigt Figur 2 eine deutliche Verbesserung der Stabilität des Katalysators, der ausgehend vom mit Sulfanilsäure dotierten Polypyrrols hergestellt wurde, im Vergleich zum Stand der Technik. Die Kombination insbesondere von Polypyrrol und Sulfanilsäure zeigt damit einen unerwarteten Effekt auf die Morphologie der Katalysatorpartikel und auf die Aktivität und Stabilität in der Brennstoffzelle.

Die Präparation der Membran-Elektrodeneinheit (MEA) erfolgte hierzu folgendermaßen. Zunächst wurden Anoden- und Kathoden-Katalysatoren jeweils zu Tinten verarbeitet. Die Zusammensetzung der Anodentinte bestand aus 80 mg Pt/C Elyst Pt20 0390 von Umicore AG & Co. KG, 0,8 ml Wasser, 0,8 ml einer 5 % Nafion™ Lösung. Die Kathodentinte bestand aus 80 mg des jeweiligen Kathodenkatalysators, 0,26 ml Wasser, 2 ml Isopropanol und 1 ml der 5 % Nafion™ Lösung. Die Mischungen wurden jeweils bei T = 10 bis 15 °C im Ultraschallbad dispergiert, um eine homogene Verteilung zu erhalten. Die Katalysatortinten wurden mittels Airbrush-Pistole auf eine Gasdiffusionslage SE H23C9 von Freudenberg aufgebracht. Die Beladung der Anoden betrug jeweils 0,1 $mg_{Pt}$ cm$^{-2}$. Die Beladung der Kathode betrug 3,32 mg cm$^{-2}$für den Polypyrrol-Sulfanilsäure basierenden Katalysator, 3,49 mg cm$^{-2}$ für den Polypyrrol-Methylorange basierenden Katalysator und 3,72 mg cm$^{-2}$ für den Polypyrrol-Toluolsulfonsäure basierenden Katalysator. Die leicht unterschiedlichen Beladungen der Kathodenkatalysatoren ergeben sich durch das Auftragen der Materialien durch den händischen Prozess mit der Airbrush-Pistole. Wie von D. Banham, T. Kishimoto, Y. Zhou, T. Sato, K. Bai, J.-I. Ozaki, Y. Imashiro und S. Ye in dem Artikel "Critical advancements in achieving high power and stable nonprecious metal catalyst-based MEAs for real-world proton exchange membrane fuel cell applications" in Science Advances, 2018, 4, 3, DOI: 10.1126/sciadv.aar7180 beschrieben, ist bekannt, dass eine höhere Beladung der Katalysatoren mit einer leicht verbesserten Aktivität und einer leicht verbesserten Stabilität einhergeht. Die MEA wurde über Heißpressen von Anodenseite, Nafion212 Membran und Kathodenseite erreicht, wobei die mit dem Katalysator beschichteten Flächen jeweils zur Nafionmembran hin ausgerichtet waren. Die Fläche der MEA betrug 4,84 cm$^2$.

Die Messung der Polarisationskurven erfolgte mittels des Brennstoffzellenteststandes Modell 850e von Scribner Associates. Die Messung wurde bei einer Zelltemperatur von 81 °C, mit 96 % Befeuchtung der Gase, 1 bar Gegendruck und einem Gasfluss von jeweils 200 ml min$^{-1}$ durchgeführt. Die Messung wurde unter $H_2$-Luft durchgeführt. Die Polarisationskurve wurde durch das stufenweise Erhöhen des Stroms ausgehend von 0 A mit einer Rate von 0,03 A alle 10 Sekunden erhalten.

Die Messung der Kurzzeitstabilitätstests erfolgte direkt im Anschluss an die Messung der Polarisationskurve. Hierzu wurde ein konstantes Potential von 500 mV angelegt und die Stromantwort für 20 Stunden aufgezeichnet.

Die Aufnahmen der TEM Fotografien erfolgten mit einem FEI-Philips CM20. Die Beschleunigungsspannung betrug 120 kV es wurde eine $LaB_6$ Elektrode verwendet. Die Proben wurden vorbereitet durch Dispersion in Isopropanol und Auftropfen auf ein TEM Kupfer-Netz mit Kohlenstofflochfilm S147-4 von Plano™.

**Einfluss des Entfernens / Herauswaschens des Dotiermittels**

Zur Untersuchung des Einflusses über das Entfernen des Dotiermittels bzw. dessen Gehalts im Polypyrrol-Präkursor wurde als Modellverbindung, die analog zum Stand der Technik ist, auf das Polypyrrol-Methylorange basierte Katalysatorsystem zurückgegriffen und Eisen als Metall gewählt. Die Synthese der Katalysatoren ist in Modellbeispiel 2 bis 4 beschrieben. Unterschiedliche Mengen an Dotiermittel in der Präkursormischung wurden durch Herauswaschen des Dotiermittels nach der Synthese der Polypyrrol-Nanoröhrchen erhalten. Es wurde ein Katalysator hergestellt ausgehend von ungewaschenem Präkursor wie in Modellbeispiel 2 beschrieben. Es wurde ein Katalysator hergestellt ausgehend von gewaschenem Präkursor wie in Modellbeispiel 3 beschrieben, hierzu wurde ein definierter Waschschritt 5-mal durchgeführt. Zudem wurde ein Katalysator hergestellt ausgehend von gewaschenem Präkursor wie in Modellbeispiel 4 beschrieben, hierzu wurde ein definierter Waschschritt 40-mal durchgeführt. Figur 4 zeigt den Einfluss des Herauswaschens des Dotiermittels nach Synthese des Polypyrrols auf die BET-Oberfläche der hergestellten Katalysatoren. Figur 5 zeigt die Polarisationskurven einer Protonentauschmembran-Brennstoffzelle in $H_2$-$O_2$, präpariert mit den beschriebenen Katalysatoren ausgehend von verschieden gewaschenen Polypyrrol Präkursoren.

Aus Figur 4 geht hervor dass das Belassen des Dotiermittels im Präkursor sich durch eine Erhöhung der BET-Oberfläche positiv bemerkbar macht. Dieser Effekt wird durch eine erhöhte Aktivität in der Brennstoffzelle, wie in Figur 5 gezeigt, bestätigt. Da im Stand der Technik die Erhöhung der Brennstoffzellen Aktivität auf die Ausbildung einer Nanoröhrchenstruktur zurückgeführt wird, diese ja aber bereits bei der Polymerisation entsteht und nicht durch den Waschschritt verändert wird, ist der gefundene Effekt des Dotiermittels auf die BET-Oberfläche überraschend neu zum Stand der Technik.

Die Messungen der BET-Oberflächen erfolgten wurden mittels $N_2$ Adsorption und Desorption Experimenten. Hierzu wurden ca. 40 mg der Katalysatoren eingewogen. Die Experimente wurden mit einem Autosorb-3B von Quantachrome durchgeführt. Auch die Analysesoftware wurde entsprechend von Quantachrome verwendet. Das Entgasen der Proben vor der Messung wurde unter Vakuum bei 200 °C für 18 Stunden durchgeführt.

Die Präparation der MEAs erfolgte auf gleiche Art und Weise wie im Abschnitt "Einfluss des Dotiermittels" beschrieben. Die Beladung der Kathode betrug 2,16 mg cm$^{-2}$für den Katalysator basierend auf dem ungewaschenen Polypyrrol-Präkursor, 2,57 mg cm$^{-2}$für den Katalysator basierend auf dem 5-fach gewaschenen Polypyrrol-Präkursor und 2,49 mg cm$^{-2}$für den Katalysator basierend auf dem 40-fach gewaschenen Polypyrrol-Präkursor.

Die Messung der Polarisationskurven erfolgte auf die gleiche Art und Weise wie bereits im Abschnitt "Einfluss des Dotiermittels" beschrieben, allerdings unter Verwendung der Gase $H_2$-$O_2$.

**Einfluss des verwendeten Übergangsmetall-Präkursors**

Zur Untersuchung des Einflusses des Übergangsmetall-Präkursors wurde als Modellverbindung, die analog zum Stand der Technik ist, auf das Polypyrrol-Methylorange basierte Katalysatorsystem zurückgegriffen und Eisen als Metall gewählt. Die Synthese ist in Modellbeispiel 5 beschrieben. Figur 6 zeigt die Sauerstoffreduktions-Aktivitäten der Katalysatoren unter Verwendung verschiedener Eisensalz-Präkursoren. Die Rotierende-Ring-Disk-Elektroden (RRDE) Messungen zeigen eine Erhöhung der Katalysator Aktivität und Selektivität unter Verwendung der Salze $FeCl_3$, $FeCl_2$, sowie einer Mischung aus $FeCl_3$ und $Fe(NO_3)_3$ im Vergleich zu $Fe(Ac)_2$, FeOx (Eisenoxalat) und $Fe(NO_3)_3$.

Die Rotierende-Ring-Disk-Elektroden (RRDE) Messungen erfolgten mit Hilfe eines MSR Rotators (Pine Instruments), einer OD PEEK Welle und einer "glassy carbon" Kohlenstoff-Disk-Platin-Ring-Elektrode. Als Gegenelektrode diente ein "glassy carbon" Stab und als Referenzelektrode eine Ag/AgCl(3M KCl)-Elektrode. Alle angegeben Potentiale beziehen sich auf das Potential der Reversiblen-Wasserstoff-Elektrode. Das Potential der verwendeten Referenzelektrode wurde vor Beginn der Messung mittels einer entsprechenden Elektrode Hydroflex® von Gaskatel GmbH bestimmt. Es wurde der Potentiostat Parstat3000A von AMETEK sowie die Software Versa Studio von Princeton Applied Research verwendet. Zur Herstellung der Katalysatortinte wurde 5 mg des jeweiligen Katalysators für 45 min mit 0,142 ml Wasser, 0,083 ml Isopropanol und 0,025 ml 5 % Nafion™ in einem Emmi®-H210 Ultraschallbad dispergiert. Die Katalysatorbeladung der Arbeitselektrode betrug 0,5 mg cm$^{-2}$. Alle Messungen wurden in 0,1 M $H_2SO_4$ durchgeführt. Die gezeigten Sauerstoffreduktionskurven sind kapazitätskorrigiert, das heißt Messungen bei gleicher Vorschubgeschwindigkeit, aber in Stickstoff-gesättigtem Elektrolyt, wurden von den eigentlichen Messwerten abgezogen. Die Messungen wurden mit einer Vorschubgeschwindigkeit von 10 mV s$^{-1}$ und bei einer Rotation von 1.500 U min$^{-1}$ aufgenommen. Dargestellt sind die kathodischen Sweeps der Messung. Für die Bestimmung der Wasserstoffperoxidausbeute wurde zunächst der Platinring in Stickstoff-gesättigter Lösung durch Zyklieren aktiviert. Parallel zu den CVs an der Disk in $O_2$ gesättigtem Elektrolyt (10 mV s$^{-1}$, 1.500 U min$^{-1}$) wurde am Platinring der Rotierenden-Ring-Disk-Elektrode ein konstantes Potential von 1,2 V angelegt und der Strom während der gesamten Messung aufgezeichnet. Aus der Zeitabhängigkeit beider Messungen (d. h. $I_d$ (Strom an der Arbeitselektrode mit dem Katalysator) und $I_r$ (Strom an der Ringelektrode resultierend aus der Oxidation von $H_2O_2$)) lässt sich jedem Potential ein Wertepaar aus $I_d$ und $I_r$ zuordnen. Da nicht jedes Wasserstoffperoxid-Molekül an der Ringelektrode oxidiert werden kann, beschreibt die Einsammel-Effizienz N, die Wahrscheinlichkeit, dass es zum Ereignis kommt. Für die verwendete Elektrodengeometrie liegt N bei 0,38. Zur Berechnung der Wasserstoffperoxidausbeute wurde folgende Gleichung herangezogen:

$$\% \, H_2O_2 = \frac{2I_r/N}{I_d + I_r/N}$$

**Einfluss der Menge der Übergangsmetallsalze in Präkursormischung am Beispiel Eisen**

Zur Untersuchung des Effekts der zugegebenen Menge an Übergangsmetallsalzen in der Präkursormischung wurden Katalysatoren wie in Modellbeispiel 6 beschrieben hergestellt. Figur 7 zeigt die Polarisationskurven einer Protonentauschmembran-Brennstoffzelle in $H_2$-$O_2$, präpariert mit Katalysatoren ausgehend von verschieden Verhältnissen an $FeCl_3$ und $Fe(NO_3)_3 \times 9$ $H_2O$, die ansonsten identisch hergestellt wurden. Aus Figur 7 geht hervor, dass ein Katalysator, hergestellt aus einer Mischung von 1,0 g des dotierten Polypyrrols mit 1,000 g $FeCl_3$ und 1,250 g $Fe(NO_3)_3 \times 9$ $H_2O$, eine verbesserte Aktivität in der Brennstoffzelle erzeugt als dieser, hergestellt aus der Mischung von 1,00 g des dotierten Polypyrrols sowie 0,666 g $FeCl_3$ und 0,834 g $Fe(NO_3)_3 \times 9$ $H_2O$.

Die Präparation der MEAs erfolgte auf gleiche Art und Weise wie im Abschnitt" Einfluss des Dotiermittels" beschrieben. Die Beladung der Kathode betrug 3,3 mg cm$^{-2}$ für den Katalysator basierend auf der 1,000 g Polypyrrol, 1,000 g $FeCl_3$ und 1,250 g $Fe(NO_3)_3 \times 9$ $H_2O$, beinhalteten Präkursormischung und 3,4 mg cm$^{-2}$ für den Katalysator basierend auf der 1,000 g Polypyrrol, 0,666 g $FeCl_3$ und 0,834 g $Fe(NO_3)_3 \times 9$ $H_2O$, beinhalteten Präkursormischung.

Die Messung der Polarisationskurven erfolgte auf die gleiche Art und Weise wie bereits im Abschnitt "Einfluss des Dotiermittels" beschrieben, allerdings unter Verwendung der Gase $H_2$-$O_2$.

**Wirkung von Mangansalzen als zusätzliche Metallquelle**

Zur Untersuchung des Effektes von $KMnO_4$ und $Mn(Ac)_2$ als zusätzliche zweite Metallquellen wurden Katalysatoren wie in Modellbeispiel 7 beschrieben hergestellt. Wiederum wurde als Modellverbindung, die analog zum Stand der Technik ist, auf das Polypyrrol-Methylorange basierte Katalysatorsystem zurückgegriffen. Figur 8 zeigt die Sauerstoff-Reduktions-Aktivität sowie $H_2O_2$ Produktion der Katalysatoren in der RRDE. Der synergistische Effekt unter Nutzung von Fe- und Mn-Salzen wird anhand der verringerten Wasserstoffperoxidmenge und der verbesserten Aktivität deutlich.

Ebenfalls wird eine verbesserte Aktivität und auch Stabilität der Katalysatoren in der Brennstoffzelle erreicht. Die Aktivität lässt sich aus den Polarisationskurven in Figur 9 ablesen, die für beide unter Manganzugabe präparierten Katalysatoren jeweils höher ist, als beim reinen Eisen-Katalysator. Die verbesserte Stabilität wird aus Figur 10 b) an der höheren verbleibenden Relativstromdichte nach jeweils gleicher Messdauer deutlich. Auch ist ersichtlich, dass $KMnO_4$ als zweites Präkursorsalz bessere Ergebnisse erzielt als $Mn(Ac)_2$.

Die Rotierende-Ring-Disk-Elektroden (RRDE) Messungen erfolgten auf die gleiche Art und Weise wie bereits im Abschnitt "Einfluss des verwendeten Übergangsmetall-Präkursors" beschrieben.

Die Präparation der MEAs erfolgt auf gleiche Art und Weise wie im Abschnitt "Einfluss des Dotiermittels" beschrieben. Die Beladung der Kathode betrug 2,8 mg cm$^{-2}$ für den $FeCl_3$ basierenden Katalysator, 3,4 mg cm$^{-2}$ für den Katalysator basierend auf $FeCl_3$ und $Mn(Ac)_2$ und 2,7 mg cm$^{-2}$ für den Katalysator hergestellt mit $FeCl_3$ und $KMnO_4$.

Die Messung der Polarisationskurven erfolgte auf die gleiche Art und Weise wie bereits im Abschnitt "Einfluss des Dotiermittels" beschrieben. Allerdings unter Verwendung der Gase $H_2$-$O_2$.

Die Messung der Kurzzeitstabilitätstests erfolgte auf die gleiche Art und Weise wie bereits im Abschnitt "Einfluss des Dotiermittels" beschrieben, allerdings unter Verwendung der Gase $H_2$-$O_2$, einem Potential von 600 mV und einer Dauer von 120 min.

**Einfluss der Menge und des Verhältnisses der Übergangsmetallsalze zueinander in der Präkursormischung**

Zur Untersuchung des Effekts der zugegebenen Menge und Verhältnisse an Übergangsmetallsalzen zueinander wurden Katalysatoren mit $FeCl_3$ und $KMnO_4$ wie in Modellbeispiel 9 und 10 beschrieben hergestellt. Figur 11 zeigt die Polarisationskurven einer Protonentauschmembran-Brennstoffzelle, präpariert mit Katalysatoren ausgehend von verschieden Mengen und Verhältnissen an $FeCl_3$ und $KMnO_4$, die ansonsten identisch hergestellt wurden. Aus Figur 11 geht hervor, dass ein Katalysator, hergestellt aus einer Mischung von 1,000 g des dotierten Polypyrrols mit 1,690 g (10,42 mmol) $FeCl_3$ und 0,500 g (3,16 mmol) $KMnO_4$ (Gesamt: 13,58 mmol Übergangsmetall, molares Verhältnis $FeCl_3$ zu $KMnO_4$ 3,3 : 1), eine verbesserte Aktivität in der Brennstoffzelle erzeugt als dieser, hergestellt aus einer Mischung von 1,000 g des dotierten Polypyrrols sowie 1,000 g (6,17 mmol) $FeCl_3$ und 0,974 g (6,26 mmol) $KMnO_4$ (Gesamt: 12,43 mmol Übergangsmetall, molares Verhältnis $FeCl_3$ zu $KMnO_4$ 0,99 : 1).

Die Präparation der MEAs erfolgte auf gleiche Art und Weise wie im Abschnitt "Einfluss des Dotiermittels" beschrieben. Die Beladung der Kathode betrug 3,2 mg cm$^{-2}$ für beide der Katalysatoren.

Die Messung der Polarisationskurven erfolgte auf die gleiche Art und Weise wie bereits im Abschnitt "Einfluss des Dotiermittels" beschrieben, allerdings unter Verwendung der Gase $H_2$-$O_2$.

**Effekt einer erhöhten Pyrolysetemperatur**

Auch hier wurde als Modellverbindung, die analog zum Stand der Technik ist, auf das Polypyrrol-Methylorange basierte Katalysatorsystem mit Eisen und Mangan zurückgegriffen. Gleichartig präparierte Präkursor-Mischungen wurden bei 800 °C, 900 °C und 1.000 °C pyrolysiert. Die Synthese hierzu ist in Modellbeispiel 11 beschrieben.

Figur 12 zeigt für diese die relative Änderung des Stroms in potentiostatischen Messungen bei 0,6 $V(H_2/O_2)$. Es ist klar ersichtlich, dass die relative Stromdichte umso höher ist, je höher die Pyrolysetemperatur war, damit wird deutlich, dass die Stabilität des Katalysators weiter erhöht werden kann, wenn die Temperatur des Pyrolyseschritts von 800 °C auf 1.000 °C erhöht wird.

Die Präparation der MEAs erfolgte auf gleiche Art und Weise wie im Abschnitt" Einfluss des Dotiermittels" beschrieben. Die Beladung der Kathode betrug 3,3 mg cm$^{-2}$ für den Katalysator welcher bei 800 °C pyrolisiert wurde und jeweils 3,4 mg cm$^{-2}$ für beide der Katalysatoren welche bei 900 °C oder 1.000 °C hergestellt wurden.

Die potentiostatischen Messungen erfolgten analog zu den im Abschnitt "Wirkung von Mangansalzen als zusätzliche Metallquelle" bereits beschriebenen.

## Einfluss eines zusätzlichen Lösungsmittels auf den Säureätzschritt

Um zu untersuchen, welchen Einfluss ein neben der Mineralsäure zusätzlich hinzugefügtes Lösungsmittel während des Säureätzschrittes hat, wurden Katalysatoren, wie in Modellbeispiel 12 beschrieben, hergestellt. Figur 13 zeigt ein $^{57}$Fe-Mössbauer Spektrum eines mit 2 M HCl geätzten Katalysators im Vergleich zu einem mit 2 M HCl + Isopropanol geätzten.

Aus dem Spektrum ist klar ersichtlich, dass der Säureätzschritt unter Zugabe des Lösungsmittels wesentlich effektiver wird als im Stand der Technik bekannt ist. Es können deutlich mehr unerwünschte anorganische Eisennebenphasen entfernt werden. Die Eisennebenphasen sind durch Pfeile gekennzeichnet. Es wird deutlich, dass die Menge an katalytisch inaktiven anorganischen Eisennebenphasen durch die Zugabe des Lösungsmittels deutlich reduziert werden konnte. Für den unter Zugabe des Isopropanols geätzten Katalysator ist zur Verdeutlichung im Insert ein vergrößertes Spektrum dargestellt, in dem keine anorganischen Nebenphasen zu sehen sind.

Figur 14 zeigt die Polarisationskurven der wie in Modellbeispiel 12 beschrieben hergestellten Katalysatoren unter $H_2$-Luft. Es wird ersichtlich, dass die Aktivität des Katalysators nach dem Ätzschritt mit 2 M HCl und Isopropanol nicht geringer, sondern sogar leicht erhöht ist. Dies ist ein überraschender Effekt, da ausgehend vom Stand der Technik vielmehr zu erwarten wäre, dass ein Verfahren zur verstärkten Entfernung der Eisenphasen im Katalysator alle Eisenphasen gleichermaßen betrifft, also anorganische Eisenphasen sowie die molekularen Aktivzentren. Dies ist für den Säureätzschritt unter zusätzlicher Verwendung eines Lösungsmittels wie beispielsweise Isopropanol jedoch nicht der Fall. Stattdessen bewirkt dieser Ätzschritt eine Verbesserung des Entfernens unerwünschter anorganischer Eisenphasen bei gleichbleibender bzw. sogar leicht erhöhter Aktivität.

Die Messung der $^{57}$Fe-Mössbauer Spektren erfolgte mit einer Transmissions-Mössbauerapparatur unter Verwendung einer $^{57}$Co/Rh-Quelle und einem Proportionalzählrohr als Detektor. Das Katalysatorpulver wurde jeweils in flache Probenhalter eingefüllt und mit herkömmlichem Tesafilm verschlossen. Die Proben wurden in einem Geschwindigkeitsbereich ± 7 mm s$^{-1}$ vermessen, wobei die Geschwindigkeitsskala mit Hilfe einer alpha-Eisen-Folie kalibriert wurde. Die Spektren sind als relative Absorption aufgetragen (100 % = Transmission + Absorption).

Die Präparation der MEAs erfolgte auf gleiche Art und Weise wie im Abschnitt "Einfluss des Dotiermittels" beschrieben. Die Beladung der Kathode betrug 3,4 mg cm$^{-2}$für den Katalysator, welcher mit 2 M HCl geätzt wurde, und 3,3 mg cm$^{-2}$ für den Katalysator, welcher mit 2 M HCl und Isopropanol geätzt wurde.

Die Messung der Polarisationskurven erfolgte auf die gleiche Art und Weise wie bereits im Abschnitt "Einfluss des Dotiermittels" beschrieben.

## Einfluss der Fluorierung mit Hitzebehandlung

In den Figuren 15 und 16 wurde die Auswirkung der Fluorierung des Katalysators mit anschließender Hitzebehandlung untersucht. Wie aus den Auftragungen gut zu erkennen ist, verursacht die Fluorierung des Katalysators einen beträchtlichen Aktivitätsabfall bei verbesserter Stabilität. Durch die Hitzebehandlung kann das Aktivitätsniveau wieder sogar etwas über den Ausgangswert angehoben werden. Gleichzeitig ist die Stabilität erheblich verbessert.

## Patentansprüche

1. Verfahren zur Herstellung eines trägerfreien Sauerstoff-Reduktions-Katalysators für die Anwendung in Niedertemperaturbrennstoffzellen beinhaltend in der angegebenen Reihenfolge die Schritte

   a) Herstellen einer Lösung eines stickstoffhaltigen aromatischen Monomers, das zu leitfähigen Polymeren führt, und einer aromatischen Sulfonsäure,
   b) Herstellen einer Lösung eines Oxidationsmittels,
   c) Mischen der Lösungen aus Schritt a) und b) und Stehenlassen der Mischung zur Herstellung eines dotierten leitfähigen Polymeren, wobei die Lösungen aus Schritt a) und b) optional mit einem oder mehreren Übergangsmetallsalzen gemischt werden können, um direkt eine Präkursor-Mischung zu erhalten,
   d) sofern nicht bereits in Schritt c) die Präkursor-Mischung hergestellt wurde, Herstellen der Präkursor-Mischung durch 1.) Mischen des dotierten leitfähigen Polymeren mit einem oder mehreren Übergangsmetallsalzen oder 2.) Imprägnieren des dotierten leitfähigen Polymeren mit einer Dispersion eines oder mehrerer Übergangsmetallsalze,

e) Pyrolyse der Präkursor-Mischung in einer Inertgasatmosphäre zur Herstellung des Katalysators,

f) Durchführen eines Säureätzschritts mit einer Mischung aus einer Mineralsäure und einem Lösungsmittel zur Herstellung eines geätzten Katalysators,

g) Pyrolyse des geätzten Katalysators in einer Inertgasatmosphäre oder einer Reaktivgasatmosphäre,

h) optional Wiederholen der Schritte f) und g).

2. Verfahren nach Anspruch 1, **dadurch gekennzeichnet, dass** das stickstoffhaltige aromatische Monomer, das zu leitfähigen Polymeren führt ausgewählt ist aus Pyrrol, Anilin, Carbazol und Indol und die aromatische Sulfonsäure ausgewählt ist aus Sulfanilsäure, Benzolsulfonsäure, Toluolsulfonsäure, Dodecylbenzolsulfonsäure und Naphthalinsulfonsäure.

3. Verfahren nach Anspruch 1 oder 2, **dadurch gekennzeichnet, dass** in Schritt a) das molare Verhältnis von stickstoffhaltigem aromatischem Monomer zu aromatischer Sulfonsäure von 30 : 1 bis 1 : 1 beträgt.

4. Verfahren nach einem der vorhergehenden Ansprüche, **dadurch gekennzeichnet, dass** das molare Verhältnis von Oxidationsmittel in Schritt b) zu stickstoffhaltigem aromatischem Monomer in Schritt a) von 1 : 5 bis 5 : 1 beträgt.

5. Verfahren nach einem der vorhergehenden Ansprüche, **dadurch gekennzeichnet, dass** das Oxidationsmittel in Schritt b) ausgewählt ist aus einem trivalenten Eisensalz, insbesondere $FeCl_3$, $H_2O_2$ und Ammoniumperoxodisulfat.

6. Verfahren nach einem der vorhergehenden Ansprüche, **dadurch gekennzeichnet, dass** das Stehenlassen in Schritt c) für 1-60 Stunden bei einer Temperatur von -25 °C bis 25 °C erfolgt.

7. Verfahren nach einem der vorhergehenden Ansprüche, **dadurch gekennzeichnet, dass** die Übergangsmetallsalze in Schritt c) und d) ausgewählt sind aus Salzen von Fe, Mn, Co, Ni, Cu, Cr, V, W, Mo, Zn und Ru, insbesondere aus $FeCl_3$, $FeCl_2$, $Fe(NO_3)_3$, $KMnO_4$, $CoCl_2$ und $Co(NO_3)_2$, vorzugsweise als Kombinationen $CoCl_2$ / $Co(NO_3)_2$, $FeCl_3$ / $KMnO_4$, $FeCl_3$ / $Mn(Ac)_2$ und $FeCl_3$ / $Fe(NO_3)_3$.

8. Verfahren nach einem der vorhergehenden Ansprüche, **dadurch gekennzeichnet, dass** in Schritt c) oder d) das Gewichtsverhältnis von dotiertem leitfähigem Polymer zu Übergangsmetallsalzen von 1 : 0,1 bis 1 : 10 beträgt.

9. Verfahren nach einem der vorhergehenden Ansprüche, **dadurch gekennzeichnet, dass** das Mischen in Schritt d) 1.) ein mechanisches Mischen ist und in einer Kugelmühle erfolgt.

10. Verfahren nach einem der vorhergehenden Ansprüche, **dadurch gekennzeichnet, dass** bei der Pyrolyse in Schritt e) und/oder g) mit einer Aufheizrate von 100 °C/h bis 1.000 °C/h auf eine Temperatur von 600 °C bis 1.200 °C aufgeheizt, diese Temperatur für 0,1 h bis 10 h gehalten und anschließend auf 10 °C bis 100 °C abgekühlt wird.

11. Verfahren nach Anspruch 10, **dadurch gekennzeichnet, dass** der erhaltene Katalysator nach der Pyrolyse in Schritt g) durch Umsetzung mit einem Fluorierungsmittel fluoriert und anschließend erneut pyrolysiert wird.

12. Verfahren nach Anspruch 11, **dadurch gekennzeichnet, dass** das Fluorierungsmittel eine fluorhaltige Verbindung mit einer primären Aminogruppe und eine Nitritverbindung umfasst.

13. Verfahren nach Anspruch 12, **dadurch gekennzeichnet, dass** die fluorhaltige Verbindung mit einer primären Aminogruppe eine perfluorierte aromatische Verbindung, insbesondere Pentafluoro-Anilin, ist und/oder die Nitritverbindung ein anorganisches Nitritsalz, insbesondere ein Alkalimetallnitrit, ist.

14. Verfahren nach einem der vorhergehenden Ansprüche, **dadurch gekennzeichnet, dass** der Säureätzschritt in Schritt f) für 1 h bis 10 h in einem Ultraschallbad in einer Inertgasatmosphäre bei einer Temperatur von 20 °C bis 100 °C erfolgt.

15. Verfahren nach einem der vorhergehenden Ansprüche, **dadurch gekennzeichnet, dass** der Säureätzschritt in Schritt f) mit einer 0,1 M bis 10 M Mineralsäure und einem organischen Lösungsmittel ausgewählt aus Isopropanol, Ethanol, Methanol, Polyolen, wie beispielsweise Ethylenglycol, Diethylenglycol, Triethylenglycol, Glycerol und Propylenglycol, Dimethylformamid, Tetrahydrofuran und Pyridin erfolgt, wobei das Volumenverhältnis von Mineralsäure zu Lösungsmittel 1 : 10 bis 10 : 1 beträgt.

16. Verfahren nach einem der vorhergehenden Ansprüche, **dadurch gekennzeichnet, dass** nach dem Säureätzschritt in Schritt f) die Mischung 10 h bis 24 h ruhen gelassen wird, bevor sie filtriert, gewaschen und getrocknet wird.

**17.** Verfahren nach einem der vorhergehenden Ansprüche, **dadurch gekennzeichnet, dass** bei der Pyrolyse in Schritt g) das Reaktivgas ausgewählt wird aus $N_2/H_2$, $H_2$, $CO_2$, $NH_3$.

**18.** Trägerfreier Sauerstoff-Reduktions-Katalysator hergestellt nach einem Verfahren der vorhergehenden Ansprüche.

**19.** Trägerfreier Sauerstoff-Reduktions-Katalysator nach Anspruch 18, **dadurch gekennzeichnet, dass** der Präkursor des dotierten leitfähigen Polymeren keine Nanoröhrchen-Struktur aufweist.

## Claims

**1.** Method for producing a substrate-free oxygen reduction catalyst for use in low temperature fuel cells comprising in the given sequence the steps of:

a) producing a solution of a nitrogen-containing aromatic monomer which leads to conductive polymers and an aromatic sulfonic acid,
b) producing a solution of an oxidising agent,
c) mixing the solutions from step a) and b) and allowing the mixture to stand to produce a doped conductive polymer, wherein the solutions of step a) and b) may optionally be mixed with one or more transition metal salts to directly obtain a precursor mixture,
d) if the precursor mixture has not already been prepared in step c), preparing the precursor mixture by 1.) mixing the doped conductive polymer with one or more transition metal salts or 2.) impregnating the doped conductive polymer with a dispersion of one or more transition metal salts,
e) pyrolising the precursor mixture in an inert gas atmosphere to produce the catalyst,
f) performing an acid etching step with a mixture of a mineral acid and a solvent to produce an etched catalyst,
g) pyrolysing the etched catalyst in an inert gas atmosphere or a reactive gas atmosphere,
h) optionally repeating the steps f) and g).

**2.** Method according to claim 1, **characterised in that** the nitrogen-containing aromatic monomer leading to conductive polymers is selected from pyrrole, aniline, carbazole and indole and the aromatic sulfonic acid is selected from sulfanilic acid, benzenesulfonic acid, toluenesulfonic acid, dodecylbenzenesulfonic acid and naphthalene sulfonic acid.

**3.** Method according to claim 1 or 2, **characterised in that** in step a) the molar ratio of nitrogen-containing aromatic monomer to aromatic sulfonic acid is from 30:1 to 1:1.

**4.** Method according to any of the preceding claims, **characterised in that** the molar ratio of oxidising agent in step b) to nitrogen-containing aromatic monomer in step a) is from 1:5 to 5:1.

**5.** Method according to any of the preceding claims, **characterised in that** the oxidising agent in step b) is selected from a trivalent iron salt, in particular $FeCl_3$, $H_2O_2$ and ammonium peroxodisulfate.

**6.** Method according to any of the preceding claims, **characterised in that** the leaving to stand in step c) is for 1-60 hours at a temperature of -25°C to 25°C.

**7.** Method according to any of the preceding claims, **characterised in that** the transition metal salts in step c) and d) are selected from salts of Fe, Mn, Co, Ni, Cu, Cr, V, W, Mo, Zn and Ru, in particular $FeCl_3$, $FeCl_2$, $Fe(NO_3)_3$, $KMnO_4$, $CoCl_2$ and $Co(NO_3)_2$, preferably as combinations $CoCl_2 / C_O(NO_3)_2$, $FeCl_3 / KMnO_4$, $FeCl_3 / Mn(Ac)_2$ and $FeCl_3 / Fe(NO_3)_3$.

**8.** Method according to any of the preceding claims, **characterised in that** in step c) or d) the weight ratio of doped conductive polymer to transition metal salts is from 1 : 0.1 to 1 : 10.

**9.** Method according to any of the preceding claims, **characterised in that** the mixing in step d) 1.) is mechanical mixing and is performed in a ball mill.

**10.** Method according to any of the preceding claims, **characterised in that** during the pyrolysis in step e) and/or g) is heated at a heating rate of 100°C/h to 1,000°C/h to a temperature of 600°C to 1,200°C, this temperature is maintained for 0.1 h to 10 h and then cooled to 10°C to 100°C.

**11.** Method according to claim 10, **characterised in that** the catalyst obtained is fluorinated after pyrolysis in step g) by reaction with a fluorinating agent and then pyrolysed again.

**12.** Method according to claim 11, **characterised in that** the fluorinating agent comprises a fluorine-containing compound with a primary amino group and a nitrite compound.

**13.** Method according to claim 12, **characterised in that** the fluorine-containing compound with a primary amino group is a perfluorinated aromatic compound, in particular pentafluoroanaline, and/or the nitrite compound is an inorganic nitrite salt, in particular an alkali metal nitrite.

**14.** Method according to any of the preceding claims, **characterised in that** the acid etching step in step f) is carried out for 1 h to 10 h in an ultrasonic bath in an inert gas atmosphere at a temperature of 20°C to 100°C.

15. Method according to any of the preceding claims, **characterised in that** the acid etching step in step f) is carried out with a 0.1 M to 10 M mineral acid and an organic solvent selected from isopropanol, ethanol, methanol, polyols such as for example ethylene glycol, diethylene glycol, triethylene glycol, glycerol and propylene glycol, dimethylformamide, tetrahydrofuran and pyridine, wherein the volume ratio of mineral acid to solvent is 1:10 to 10:1.

16. Method according to any of the preceding claims, **characterised in that** after the acid etching step in step f) the mixture is left to rest for 10 h to 24 h before being filtered, washed and dried.

17. Method according to any of the preceding claims, **characterised in that** during the pyrolysis in step g) the reactive gas is selected from $N_2/H_2$, $H_2$, $CO_2$, $NH_3$.

18. Substrate-free oxygen reduction catalyst prepared according to a method of the preceding claims.

19. Substrate-free oxygen reduction catalyst according to claim 18, **characterised in that** the precursor of the doped conductive polymer does not have a nanotube structure.

**Revendications**

1. Procédé pour la production d'un catalyseur de réduction d'oxygène non supporté pour l'utilisation dans des piles à combustible basse température contenant dans l'ordre indiqué les étapes

> a) production d'une solution d'un monomère aromatique contenant de l'azote qui conduit à des polymères conducteurs et d'un acide sulfonique aromatique,
> b) production d'une solution d'un agent oxydant,
> c) mélange des solutions issues des étapes a) et b) et mise au repos du mélange pour la production d'un polymère conducteur dopé, dans lequel les solutions issues des étapes a) et b) peuvent être mélangées facultativement avec un ou plusieurs sels de métaux de transition pour recevoir directement un mélange de précurseurs,
> d) dans la mesure où le mélange de précurseurs n'a pas déjà été produit à l'étape c), production du mélange de précurseurs par le biais 1.) d'un mélange du polymère conducteur dopé avec un ou plusieurs sels de métaux de transition ou 2.) d'une imprégnation du polymère conducteur dopé avec une dispersion d'un ou plusieurs sels de métaux de transition,
e) pyrolyse du mélange de précurseurs dans une atmosphère de gaz inerte pour la production du catalyseur,
f) exécution d'une étape de gravure à l'acide avec un mélange issu d'un acide minéral et d'un solvant pour la production d'un catalyseur gravé,
g) pyrolyse du catalyseur gravé dans une atmosphère de gaz inerte ou une atmosphère de gaz réactif,
h) facultativement répétition des étapes f) et g).

2. Procédé selon la revendication 1, **caractérisé en ce que** le monomère aromatique contenant de l'azote qui conduit à des polymères conducteurs est sélectionné parmi le pyrrole, l'aniline, le carbazole et l'indole et l'acide sulfonique aromatique est sélectionné parmi l'acide sulfanilique, l'acide benzosulfonique, l'acide toluènesulfonique, l'acide dodécylbenzènesulfonique et l'acide naphtalènesulfonique.

3. Procédé selon la revendication 1 ou 2, **caractérisé en ce qu'**à l'étape a) le rapport molaire entre le monomère aromatique contenant de l'azote et l'acide sulfonique aromatique est de 30/1 à 1/1.

4. Procédé selon l'une quelconque des revendications précédentes, **caractérisé en ce que** le rapport molaire entre l'agent oxydant à l'étape b) et le monomère aromatique contenant de l'azote à l'étape a) est de 1/5 à 5/1.

5. Procédé selon l'une quelconque des revendications précédentes, **caractérisé en ce que** l'agent oxydant à l'étape b) est sélectionné parmi un sel ferreux trivalent, en particulier $FeCl_3$, $H_2O_2$ et le peroxodisulfate d'ammonium.

6. Procédé selon l'une quelconque des revendications précédentes, **caractérisé en ce que** la mise au repos à l'étape c) s'effectue pendant 1 à 60 heures à une température de -25 °C à 25 °C.

7. Procédé selon l'une quelconque des revendications précédentes, **caractérisé en ce que** les sels de métaux de transition sont sélectionnés aux étapes c) et d) parmi des sels de Fe, Mn, Co, Ni, Cu, Cr, V, W, Mo, Zn et Ru, en particulier parmi $FeCl_3$, $FeCl_3$, $Fe(NO_3)_3$, $KMnO_4$, $CoCl_2$ et $Co(NO_3)_2$, de préférence en tant que combinaisons de $CoCl_2/CO(NO_3)_2$, $FeCl_3/KMnO_4$, $FeCl_3/Mn(Ac)_2$ et $FeCl_3/Fe(NO_3)_3$.

8. Procédé selon l'une quelconque des revendications précédentes, **caractérisé en ce qu'**à l'étape c) ou d) le rapport pondéral entre le polymère conducteur dopé et les sels de métaux de transition est de 1/0,1 à 1/10.

9. Procédé selon l'une quelconque des revendications précédentes, **caractérisé en ce que** le mélange à l'étape d) 1.) est un mélange mécanique et se produit dans un broyeur à billes.

10. Procédé selon l'une quelconque des revendications précédentes, **caractérisé en ce que** lors de la pyrolyse à l'étape e) et/ou g) chauffée à une vitesse de chauffage de 100 °C/h à 1000 °C/h à une température de 600 °C à 1200 °C, cette température est maintenue pendant 0,1 h à 10 h et ensuite refroidie à 10 °C à 100 °C.

11. Procédé selon la revendication 10, **caractérisé en ce que** le catalyseur obtenu est fluoré après la pyrolyse à l'étape g) par mise en œuvre avec un agent de fluoration est fluoré et est ensuite de nouveau polymérisé.

12. Procédé selon la revendication 11, **caractérisé en ce que** l'agent de fluoration comprend un composé contenant du fluor avec un groupe amino primaire et un composé nitrite.

13. Procédé selon la revendication 12, **caractérisé en ce que** le composé contenant du fluor avec un groupe amino primaire est un composé aromatique perfluoré, en particulier la pentafluoro-aniline, et/ou le composé nitrite est un sel de nitrite anorganique, en particulier un nitrite de métal alcalin.

14. Procédé selon l'une quelconque des revendications précédentes, **caractérisé en ce que** l'étape de gravure à l'acide à l'étape f) se produit pendant 1 h à 10 h dans un bain à ultrasons dans une atmosphère de gaz inerte à une température de 20 °C à 100 °C.

15. Procédé selon l'une quelconque des revendications précédentes, **caractérisé en ce que** l'étape de gravure à l'acide se produit à l'étape f) avec 0,1 M à 10 M d'acide minéral et un solvant organique sélectionné parmi l'isopropanol, l'éthanol, le méthanol, les polyols comme par exemple l'éthylène glycol, le diéthylène glycol, le triéthylène glycol, la glycérine et le propylène glycol, le diméthylformamide, le tétrahydrofurane et la pyridine, dans lequel le rapport des volumes entre l'acide minéral et le solvant est de 1/10 à 10/1.

16. Procédé selon l'une quelconque des revendications précédentes, **caractérisé en ce qu'**après l'étape de gravure à l'acide à l'étape f) le mélange est mis au repos pendant 10 h à 24 h avant d'être filtré, lavé et séché.

17. Procédé selon l'une quelconque des revendications précédentes, **caractérisé en ce que** lors de la pyrolyse à l'étape g) le gaz réactif est sélectionné parmi $N_2/H_2$, $H_2$, $CO_2$, $NH_3$.

18. Catalyseur de réduction d'oxygène non supporté produit selon un procédé des revendications précédentes.

19. Catalyseur de réduction d'oxygène non supporté selon la revendication 18, **caractérisé en ce que** le précurseur du polymère conducteur dopé ne présente pas de structure de nanotubes.

**Figur 1**

**Figur 2**

**Figur 3**

**Figur 4**

**Figur 5**

Figur 6

Figur 7

**Figur 8**

Figur 9

**Figur 10**

**Figur 11**

**Figur 12**

**Figur 13**

**Figur 14**

Figur 15

**Figur 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON DONG LIU ; JIN-CHENG LI ; QIURONG SHI ; SHUO FENG ; ZHAOYUAN LYU ; SHICHAO DING ; LEIDUAN HAO ; QIANG ZHANG ; CHEN-HUI WANG ; MINGJIE XU.** Atomically Isolated Iron Atom Anchored on Carbon Nanotubes for Oxygen Reduction Reaction. *ACS Applied Materials & Interfaces,* 2019, vol. 11 (43), 39820-39826

- **WIE VON D ; BANHAM, T ; KISHIMOTO, Y. ; ZHOU, T. ; SATO, K ; BAI, J.-I. ; OZAKI, Y. ; IMASHIRO ; S. YE.** Critical advancements in achieving high power and stable nonprecious metal catalyst-based MEAs for real-world proton exchange membrane fuel cell applications. *Science Advances,* 2018, vol. 4, 3